# EUROPÄISCHE PATENTSCHRIFT

(11) **EP 0 875 691 B1**
(45) Veröffentlichungstag und Bekanntmachung des Hinweises auf die Patenterteilung: **30.06.2004**
(21) Anmeldenummer: 98101858.3
(22) Anmeldetag: 04.02.1998
(51) Int. Cl.: F16D 69/02, F16D 69/04, B61H 7/08, F16D 65/092

(54) **Sinterwerkstoff für eine magnetische Schienenbremse**
Sintered material for a magnetic rail-brake
Matériau fritté pour un frein magnétique sur rail

(30) Priorität: 28.04.1997 DE 29707550 U
(43) Veröffentlichungstag der Anmeldung: 04.11.1998
(73) Patentinhaber: KNORR-BREMSE Systeme für Schienenfahrzeuge GmbH, 80809 München (DE); AlliedSignal Bremsbelag GmbH, 21509 Glinde (DE)
(72) Erfinder: Grupp, Friedemann, 47839 Krefeld (DE); Kröger, Uwe, 80993 München (DE); Saumweber, Eckart, Dr., 82131 Gauting (DE); Schröer, Wolfgang, Dr.-Ing., 21481 Lauenburg (DE); Valentin, Wolfgang, 21509 Glinde (DE)
(74) Vertreter: Richter, Werdermann, Gerbaulet & Hofmann

(56) Entgegenhaltungen:
- EP-A- 0 442 052
- EP-A- 0 581 988
- GB-A- 2 307 248
- PATENT ABSTRACTS OF JAPAN vol. 006, no. 219 (C-132), 2. November 1982 & JP 57 123280 A (TOSHIBA TUNGALOY KK), 31. Juli 1982
- PATENT ABSTRACTS OF JAPAN vol. 018, no. 469 (M-1666), 31. August 1994 & JP 06 147244 A (RAILWAY TECHNICAL RES INST;OTHERS: 01), 27. Mai 1994

## Beschreibung

Die Erfindung betrifft einen Sinterwerkstoff für einen Polschuh einer magnetischen Schienenbremse gemäß dem Oberbegriff des Anspruches 1, eine magnetische Schienenbremse sowie einen Polschuh für eine magnetische Schienenbremse.

Bei magnetischen Schienenbremsen gemäß dem Stand der Technik wurden als Reibwerkstoffe vorzugsweise St37-Stahl eingesetzt. Nachteilig an der Verwendung einer St37-Reibschicht war, dass vermehrt Aufschweißungen auftraten, die die Bremskraft der Bremse stark herabsetzten. Um diese wieder herzustellen, war es erforderlich, die Aufschweißungen von Hand zu entfemen, was hohe Wartungskosten verursachte. Die Verwendung von GGG40-Sphäroguss führte zwar zu weniger Aufschweißungen, jedoch konnten mit derartigen Reibschichten nur geringe Bremskräfte aufgebracht werden.

Ein weiteres Problem bei magnetischen Schienenbremsen gemäß dem Stand der Technik bestand in der Verbindung von Reibwerkstoff und Trägerkörper bzw. Grundkörper. Diese Verbindung wird nach dem Stand der Technik durch Sintern, Kleben oder durch Schweißen hergestellt. Während die Sinter-Verbindungen häufig schon bei geringen Scherkräften aufbrachen, hatten die Klebeverbindungen den Nachteil, dass sie Zwischenlagen erforderten, an deren Übergang zum Reibwerkstoffblock Rissbildungen und/oder Korrosionen auftraten, so dass eine Unterrostung des Reibmaterialblockes kriechend von einer Seite auftreten kann, die zu einer Beeinträchtigung der Bremswirkung und - im Extremfall - zu einem Ausfall des Bremsbelages führen konnte. Das Verkleben des Reibmaterials mit dem Trägerblech erfordert bei der Bremsbelagherstellung durch die Wärmebehandlung des Klebemittels auch relativ lange Standzeiten, was zu niedrigen Fertigungszahlen führt. Eine Verkürzung der Standzeiten der Wärmebehandlung des Klebemittels ist nur bei Inkaufnahme einer unzureichenden Haftverbindung möglich. Oftmals reicht auch die Rauhigkeit der zu verklebenden Oberflächen nicht aus, um eine hinreichende Haftung zu ermöglichen. Daher ist in der DE-UI-82 OI 404 bereits vorgeschlagen worden, die Trägerplatte auf der den Reibwerkstoffblock tragenden Seite mit einem aufgesinterten Halterungsbett aus einzelnen, mit dem Reibwerkstoffblock kraft- und formschlussbildenden Formkörpem mit Hinterschneidungen, Einziehungen o. dgl. zu versehen, auf dem der aufgepresste Reibwerkstoff in Blockform unter Ausfüllung der Hinterschneidungen, Einziehungen o. dgl. der einzelnen Formkörper befestigt ist. Im praktischen Betrieb hat sich jedoch gezeigt, dass die Haftung nach wie vor unzureichend ist, da mechanische Kräfte sowie auftretende Schwingungen zu einem Aufbrechen der Verbindung führen. Die mikroskopisch kleinen und eine rauhe Oberfläche darstellenden Formkörper bestehen zudem aus anderem Material als der übrige Werkstoff des Halterungsbettes, weshalb sich insgesamt ein Bett in homogener Zusammensetzung bildet, das bei Belastungen zu Rissbildungen oder einem Ausbrechen der Formkörper neigt. Hinzu kommt, dass an der Verbindungsstelle mit einem Halterungsbett statt einer Verbindungsfläche zwei Verbindungsflächen geschaffen werden müssen, nämlich der Übergang vom Reibwerkstoffkörper zum Halterungsbett und vom Halterungsbett zum Trägerkörper.

Durch die EP-A-0 581 988 ist ein Bremsklotz und ein Verfahren zu seiner Herstellung sowie eine Magnetschienenbremse für Straßen- und Schienenfahrzeuge, insbesondere auch für Schienenfahrzeuge mit hohen und höheren Geschwindigkeiten bekannt. Um die Verbindung eines Trägerkörpers auf einem Reibwerkstoffblock für einen Bremsklotz für Straßen- und Schienenfahrzeuge sicherer zu gestalten, wird hier vorgeschlagen, den Reibwerkstoffblock auf mehreren, nicht in einer Ebene liegenden, aneinander grenzenden Flächenstücken von Teilen des gegossenen Trägerkörpers kraft- und/oder formschlüssig zu umfassen. Dies wird dadurch erreicht, dass der fertig gesinterte Körper in eine Gussform gelegt und vom Trägerwerkstoff umgossen wird. Der Bremsklotz gemäß der EP-A-0 581 988 ist dadurch gekennzeichnet, dass mindestens der Reibwerkstoffblock auf mehreren, nicht in einer Ebene liegenden, aneinander grenzenden Flächenstücken von Teilen des gegossenen Trägerkörpers kraft- und formschlüssig umfasst wird. Es wird somit nicht nur eine Verbindung zweier aneinanderliegender, ggf. aufgerauhter Flächen geschaffen, sondern eine Verbindung, welche den Reibwerkstoffblock an den Seitenflächenstücken oder allseitig umfasst. Die geometrisch einfachste Verbindung besteht beispielsweise darin, dass der quaderförmige Bremsklotz an einer seiner Stirnflächen und an den hieran angrenzenden Seitenflächen ganz oder teilweise von dem Guss-Trägerkörper umfasst wird. Die seitlichen Umfassungen dienen dann als Stützflächen zur Aufnahme von Scherkräften. Alternativ oder ergänzend wird dabei auch vorgeschlagen, dem Reibwerkstoffblock und dem Gussträgerkörper an einer Stirnseite und/oder mindestens zwei gegenüberliegenden Seitenflächen Profilierungen in Form von langgestreckten Ausstülpungen zu geben, die entsprechend ausgeformt ineinander greifen und einen natürlichen Formschluss des gegossenen Trägerkörpers um den Reibwerkstoffblock schaffen. Das für den Reibwerkstoffblock verwendete Sintermaterial enthält metallische Anteile, wodurch die Verschleißresistenz erhöht wird.

Aufgabe der vorliegenden Erfindung ist es, einen Reibwerkstoff für eine magnetische Schienenbremse anzugeben, der sich durch eine geringe Aufschweißneigung auszeichnet sowie eine magnetische Schienenbremse bzw. einen Polschuh für eine magnetische Schienenbremse, die bzw. der ausreichende Standzeiten zulässt und bei der ausreichend große Bremskräfte entwickelt werden.

Diese Aufgabe wird durch einen Sinterwerkstoff gemäß Anspruch 1, einen Polschuh für eine magnetische Schienenbremse gemäß Anspruch 6 und eine magnetische Schienenbremse gemäß Anspruch 11 gelöst. Die Erfindung besteht somit darin, dass ein Sinterwerkstoff als Reibwerkstoff für einen Polschuh, einen Polschuhbereich oder Polschuhreibflächen einer magnetischen Schienenbremse
- einen Anteil an pulverisiertem Verschleißhemmer, der aus einem oder Kombinationen mehrerer der nachfolgenden Stoffe ausgewählt wird:
   Al₂O₃, ZrO₂, Al₂TiO₅, Y₂O₃, SiC, Si₃N₄, WC, Cr₃C₂, TiC
   und/oder
- einen Anteil eines schutzschichtbildenden Pulvers, das aus einem oder Kombinationen mehrerer nachfolgenden Stoffe ausgewählt wird:
   Sphäroguss, Graphit, Eisensulfid, Mangansulfid, Blei, Molybdändisulfid,
umfasst.

In einer bevorzugten Ausführungsform kann der Sinterwerkstoff auch einen Anteil aus magnetisch leitfähigem Pulver, beispielsweise Eisenpulver aufweisen.

Eine besonders verschleißfeste Zusammensetzung des Sinterwerkstoffes als Reibwerkstoff ist:

| | |
|---|---|
| 80 - 99 % | magnetisch leitfähigen und/oder magnetisch nicht leitfähigen Materials |
| 0,5 - 5 % | Molybdändisulfid |
| 0,5 - 5 % | Kohlenstoff |
| 0,5 - 2 % | Siliciumcarbid |

Umfasst der Sinterwerkstoff in einer ersten Ausführungsform 80 bis 99 % eines magnetisch leitfähigen Materials, so weist dieses bevorzugt einen Anteil an Eisen auf. Umfasst der Sinterwerkstoff ein magnetisch nicht leitfähiges Material, so weist dieses bevorzugt mehrere oder Kombinationen der nachfolgenden Stoffe:
Zinn, Kupfer, Zink, Nickel, Aluminium oder Legierungen dieser Stoffe, beispielsweise Bronze, Messing, Neusilber auf. Gemäß einem weiteren Aspekt der Erfindung soll eine wartungsarme Schienenbremse geschaffen werden, bei der keine bzw. nur sehr dünne und kleine, d.h. vernachlässigbare Aufschweißungen auftreten, und die darüber hinaus etwa Standzeiten zuläßt, die in etwa mit den bisherigen Stahl-Gliedern vergleichbar sind. Die Bremskraft ist gleich bzw. besser als die der bisherigen Schienenbremsen mit Stahl-Gliedern.

Der magnetflußführende Polschuhbereich einer Schienenbremse soll folgende Voraussetzungen erfüllen:
- Erzeugen der magnetischen Anzugskraft (Haftkraft),
- Reibarbeit verrichten (bremsen) - ohne daß Aufschweißungen auftreten.

Beide dieser Voraussetzungen werden erfüllt, wenn eine gattungsgemäße magnetische Schienenbremse einen erfindungsgemäßen Sinterwerkstoff umfaßt, wobei es überraschend war, daß diese Voraussetzungen und Vorteile mit der oben angegebenen Zusammensetzung erreicht werden konnte. Ein magnetflußführender Polschuhbereich dieser Zusammensetzung übernimmt die beiden Aufgaben, nämlich eine magnetische Haftkraft zu erzeugen und Reibarbeit zu verrichten.

Weitere Ausgestaltungen der Erfindung sind in den Unteransprüchen beschrieben.

Neben dem Aufbringen des Sinterwerkstoffes in Form einer Beschichtung kann der Sinterwerkstoff auch als kompakter Reibwerkstoffblock ausgeführt sein, der an dem Grund- und/oder Trägerkörper befestigt wird.

In einer ersten Ausführungsform kann der Trägerkörper gegossen sein und an der Verbindungsstelle zum Reibwerkstoffblock auf mindestens zwei gegenüberliegenden Seiten langgestreckte Rippen oder Ausstülpungen jeweils mit Hinterschnitten aufweisen, die in entsprechend angepaßten Nuten oder Einziehungen am Reibwerkstoffblock kraft- und formschlüssig eingreifen. Eine spezielle Ausführungsform für eine solche kraft- und formschlüssige Verbindung ist eine schwalbenschwanzförmige Aufnahme, wie sie beispielsweise bei Führungen bekannt ist. Vorzugsweise weist hierbei der Reibwerkstoffblock an seiner Rückseite in Form einer breiten Rippe mit beidseitigen Hinterschneidungen den positiven Schwalbenschwanzteil auf, während der Trägerkörper eine entsprechend angepaßte negative Ausnehmung besitzt. Die betreffende Rippe oder andersartige Ausstülpungen mit Hinterschnitten wird bereits bei der Herstellung des Reibwerkstoffblockes mitgeformt, so daß diese Rippe zusammen mit dem übrigen Reibwerkstoffkörper ein homogenes Formteil bildet. Da der Trägerkörper mit seinem Profil bis in die Hinterschneidungen greift, wobei auch der Trägerkörper ein materialspezifisch homogenes Teil darstellt, wird allein schon durch die Außenprofilgestaltung ein Aufbrechen der Verbindungsstelle weitgehend ausgeschlossen.

Nach einer weiteren Ausgestaltung der Erfindung sind die Rippen oder Ausstülpungen einerseits und die entsprechend geformten Nuten oder Einziehungen andererseits allseitig an dem Trägerkörper oder Reibwerkstoffblock, jeweils ineinander greifend, vorgesehen.

Wie bereits erwähnt, ist nach einer speziellen Ausgestaltung der Reibwerkstoffkörper an der der aktiven Bremsfläche abgewandten Verbindungsfläche und den sich hieran anschließenden Seitenflächen über eine vorgegebene Höhe vom Tragkörper umfasst, wobei die Seitenflächen glatt oder ebenfalls mit einer Profilierung in Form einer Rippe mit Hinterschneidungen ausgestaltet werden können. Vorzugsweise schließen der Trägerkörper und der Reibwerkstoffblock an den Seiten oder an der Stirnfläche miteinander bündig ab.

Als Material werden für den Reibwerkstoffblock unter anderem auch ein Sinterwerkstoff und/oder den Trägerkörper ein Grauguss, Sphäroguss oder Stahlguss verwendet, wobei der Sinterwerkstoff die in dem Anspruch 1 angegebene Materialzusammensetzung aufweist.

Verfahrenstechnisch kann eine Verbindung zwischen Reibwerkstoffblock und Grund- bzw. Trägerkörper dadurch hergestellt werden, dass der Reibwerkstoffblock auf pulvermetallurgischem Wege nach dem Fertigsintern anschließend in eine Gussform gelegt und ganz oder teilweise so umgossen wird, dass eine kraft- und/oder formschlüssige Verbindung des so gegossenen Trägerkörpers zum Reibwerkstoffblock entsteht. Die vorbeschriebenen Profilgestaltungen bzw. Makroverzahnung in Form von Rippen oder anderen Ausstülpungen mit Hinterschneidungen oder auch Nuten oder Einziehungen werden vor dem Sintern, während des Sinterns oder nach dem Sintern in den Reibwerkstoffblock eingebracht. Durch den Guss des in die Gussmasse eingetauchten Reibwerkstoffblockes schließt sich der Trägerkörper formschlüssig im Bereich der Eintauchtiefe an das Profil des Reibwerkstoffblockes an, so dass nach dem Abkühlen eine feste Verbindung zwischen dem Reibwerkstoffblock und dem Trägerkörper besteht.

Vorzugsweise wird die Gießtemperatur kurzzeitig so groß gewählt, dass der Gießwerkstoff in die Randzonen des Reibwerkstoffblockes, z. B. bis zu 20 µm diffundiert, um in dieser Zone eine atomare Diffusionsbindung zu erhalten. Hierdurch wird der Formschluss weiterhin verbessert. Der Vorteil des vorbeschriebenen Verfahrens besteht darin, daß die Fertigung weiter rationalisiert werden kann, da der ansonsten notwendige Sinterungsprozeß für das Befestigen des Reibwerkstoffblockes an einem Trägerblech oder dem Grund- bzw. Trägerkörper ebenso entfällt wie das Aufrauhen der Verbindungsflächen, Einfügen und Vorbehandeln von Zwischenlagen und Auftragen von etwaigen Verbindungsmitteln, wie Klebern oder Lot.

Die magnetflußtrennenden Polschuhbereiche können auf der die Reibfläche bildenden Unterseite mit einer dünnen, extrem verschleißfesten, amagnetischen Beschichtung umfassend den erfindungsgemäßen Sinterwerkstoff versehen sein, die stoß- und temperaturfest ist und das Anbacken von Aufschweißungen vermeidet. Auch kann jeder Polschuh konstruktiv aus verschiedenen Materialien und Bereichen bestehen, wovon ein Bereich die Erzeugung der magnetischen Haftkraft und der andere Bereich die Verrichtung der Reibarbeit übernimmt.

Ausführungsbeispiele der Erfindung sind in den Zeichnungen dargestellt. Es zeigen
- Fig. 1: eine schematische Ansicht eines Schienenstückes mit einer Magnetschienenbremse mit Polschuhen und einem erfindungsgemäßen Reibwerkstoffblock;
- Fig. 2: eine perspektivische Ansicht eines Reibwerkstoffblockes mit durch Umgießen erhaltenem Trägerkörper;
- Fig. 3: eine Vorderansicht des Reibwerkstoffblockes mit Trägerkörper nach Fig. 2;
- Fig. 4: einen Schnitt gemäß der Linie IV - IV in Fig. 2;
- Fig. 5: in einer schaubildlichen Explosionsdarstellung den Trägerkörper und den Reibwerkstoffblock;
- Fig. 6: einen senkrechten Schnitt einer weiteren Ausführungsform der Erfindung, bei der der Reibwerkstoffblock seitlich von dem gegossenen Trägerkörper umgriffen wird;
- Fig. 7: eine schaubildliche Ansicht einer Ausführungsform, bei der der Reibwerkstoffblock von dem gegossenen Trägerkörper allseitig umgriffen ist;
- Fig.7A: in einer schaubildlichen Ansicht eine weitere Ausführungsform mit mehreren einzelnen Reibwerkstoffblöcken, die von einem gegossenen Trägerkörper mehrseitig umgriffen sind;
- Fig. 8: eine Vorderansicht einer weiteren Ausführungsform mit einer Oberflächenprofilierung bzw. Makrorauhigkeit bzw. Makroverzahnung der dem Trägerkörper zugekehrten Wandfläche des Reibwerkstoffblockes;
- Fig. 9: einen senkrechten Schnitt gemaß Linie IX - IX in Fig. 8;
- Fig. 10: einen senkrechten Schnitt durch einen Reibwerkstoffblock mit einem aufgebrachten Trägerblech mit beidseitig an den Trägerblechwandflächen aufgebrachten Halterungsbetten in Form von kugelförmigen Formkörpern vor dem Umgießen des Reibwerkstoffblockes;
- Fig. 11: in einer Ansicht von oben ein Trägerblech mit einer weiteren Ausführungsform des aufgebrachten Halterungsbettes;
- Fig. 12: einen senkrechten Schnitt gemäß Linie XII - XII in Fig. 11;
- Fig. 13: in einer Schnittdarstellung entsprechend Fig. 11 eine weitere Ausführungsform des aufgebrachten Halterungsbettes;
- Fig. 14: in Details A, B und C verschiedene Ausgestaltungen der das Halterungsbett bildenden Greifelemente;
- Fig. 15: eine schematische Ansicht eines an seinem freien Ende einen Reibwerkstoffblock tragenden Schenkels des Magnetkernes einer Magnetschienenbremse mit der dem Schenkel zugeordneten amagnetischen Zwischenleiste;
- Fig. 16: in einer schaubildlichen Ansicht den an dem Schenkel des Magnetkernes gemäß Fig. 15 befestigten Reibwerkstoffblock;
- Fig. 17: eine schematische Ansicht eines an seinem freien Ende einen Reibwerkstoffblock mit einem zwischengeschaltetem Stahlblech tragenden Schenkel des Magnetkernes einer Magnetschienenbremse mit der dem Schenkel zugeordneten amagnetischen Zwischenleiste;
- Fig. 18: in einer schaubildlichen Ansicht den an dem Schenkel des Magnetkernes gemäß Fig. 17 befestigten Reibwerkstoffblock mit dem an diesem befestigten Stahlblech;
- Fig. 19: eine schematische Ansicht eines an seinem freien Ende einen Reibwerkstoffblock mit einer an diesem befestigten amagnetischen Zwischenleiste tragenden Schenkel des Magnetkernes der Magnetschienenbremse;
- Fig. 20: in einer schaubildlichen Ansicht den an dem Schenkel des Magnetkernes gemäß Fig. 19 befestigten Reibwerkstoffblock mit der an diesem befestigten amagnetischen Zwischenleiste;
- Fig. 21: eine schematische Ansicht eines an seinem freien Ende einen Reibwerkstoffblock mit einem zwischengeschaltetem Stahlblech und mit an dem Reibwerkstoffblock befestigten amagnetischen Zwischenleiste tragenden Schenkel des Magnetkernes der Magnetschienenbremse;
- Fig. 22: in einer schaubildlichen Ansicht den an dem Schenkel des Magnetkernes gemäß Fig. 21 befestigten Reibwerkstoffblock mit dem an diesem befestigten Stahlblech und mit der an dem Reibwerkstoffblock befestigten amagnetischen Zwischenleiste;
- Fig. 23: in einer schematischen Teilansicht einen Polschuhbereich mit an seiner Unterseite angebrachter dünnen, verschleißfesten und amagnetischen Beschichtung;
- Fig. 24: in einer schematischen Teilansicht einen Polschuhbereich, dessen Reibfläche in Bereichen mit unterschiedlichen Aufgaben unterteilt ist;
- Fig. 25: eine alternative Ausführungsform der Erfindung bei einer permanentmagnetischen Schienenbremse;
- Fig. 26: eine permanentmagnetische Schienenbremse mit einer verschleiß- und stoßfesten Beschichtung im nicht magnetflußführenden Bereich.

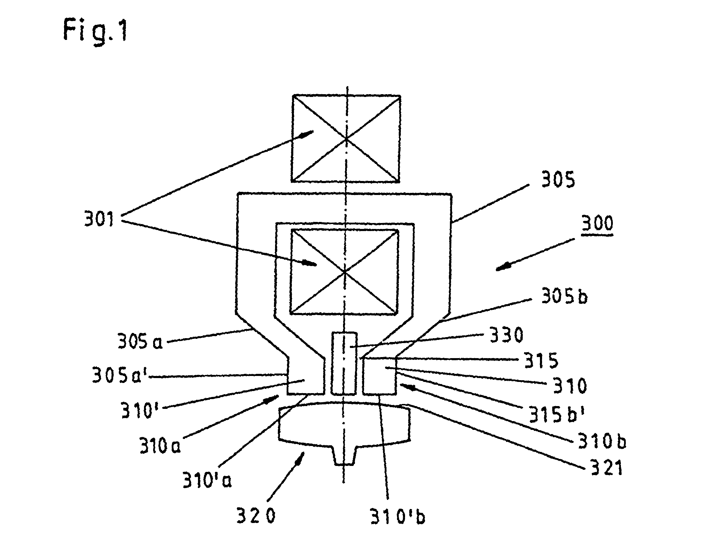

Die bevorzugterweise beschriebene Magnetschienenbremse 300 gemäß Fig. 1 besteht aus einer in die Längsrichtung einer Schiene 320 langgezogenen Spule 301 und aus einem Magnetkem 305, dessen Schenkel 305a, 305b in Richtung zu ihren freien Enden eingezogen sind, deren Enden in zwei parallel zueinander verlaufenden Schenkelabschnitten 305a', 305b' auslaufen, die endseitig Polschuhe 310, 310' mit dem Schienenkopf 321 der Schiene 320 zugekehrten Stirnflächen bzw. Polschuhreibflächen 310a, 310'a tragen.

In dem Zwischenraum 315 zwischen dem linken und dem rechten Polschuh 310, 310' (Nord- bzw. Südpol) ist eine den Zwischenraum ausfüllende amagnetische, extrem verschleißfeste, stoßfeste und temperaturbeständige Zwischenleiste 330 angeordnet, die lösbar vermittels einer Vertiefung oder Verschraubung oder unlösbar durch Anschweißung mit den Polschuhen 310, 310' verbunden ist, wobei die Zwischenleiste 330 den Zwischenraum 315 nicht auszufüllen braucht.

Jeder Polschuh 310, 310' bzw. jede Polschuhreibfläche 310a, 310'a umfaßt in der dargestellten Ausführungsform einen Reibwerkstoffblock 40 bestehend aus einem Sinterwerkstoff, umfassend einen Anteil an pulverisiertem Verschleißhemmer und/oder einen Anteil schutzschichtbildenden Pulvers, wobei der Sinterwerkstoff bei Verwendung wie vorliegend im magnetflußführenden Bereich bevorzugt die nachfolgende Zusammensetzung aufweist:

| | |
|---|---|
| 80 % bis 99 % | Eisen |
| 0,5 % bis 5 % | Molybdändisulfit |
| 0,5 % bis 5 % | Kohlenstoff |
| 0,5 % bis 2 % | Siliciumcarbid, |

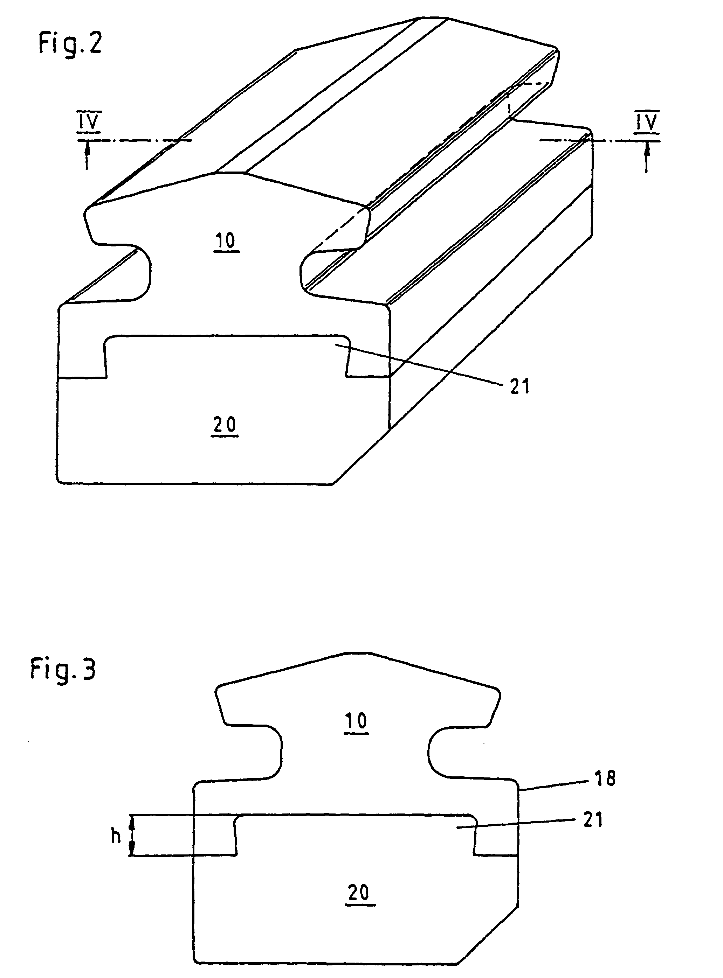

wobei auch eine andere Verteilung der Gewichtsprozente vorgenommen werden kann, falls dies erforderlich werden sollte. Jeder Polschuh 310, 310' oder jede Polschuhreibfläche 310a, 310'a besteht aus einem ein- oder mehrteilig ausgebildeten, auf einem Trägerkörper 10 bzw. 30 befestigten Blöcken 20 bzw. 40. Bei dieser Ausgestaltung wird mindestens ein Reibwerkstoffblock 20, 40 auf mehreren, nicht in einer Ebene liegenden, aneinander grenzenden Flächenstücken 23, 24 von Teilen 13, 14, 31, 32, 33 des gegossenen Trägerkörpers 10, 30 kraft- und/oder formschlüssig umfaßt (Fig. 2, 3, 4, 5 und 6).

In den Fig. 2 bis 5 ist die Verbindung eines metallischen, gegossenen Trägerkörpers 10 mit dem als Reibbelag dienenden Reibwerkstoffblock 20 gezeigt. Der Trägerkörper 10 besitzt zur Befestigung an der Magnetschienenbremse bzw. an einem Aufnahmeteil der Magnetschienenbremse die nach dem Stand der Technik bekannte, im Querschnitt pilzförmige Formgebung. Auf der Verbindungsseite zum Reibwerkstoffblock 20 hin besitzt der Trägerkörper 10 eine rippenförmige Ausnehmung über seine gesamte Länge, worin form- und kraftschlüssig eine entsprechend geformte breite Rippe 21 des Reibwerkstoffblockes 20 eingreift. Die Kombination von Trägerkörper 10 mit Reibwerkstoffblock 20 kann auch unabhängig von einer magnetischen Schienenbremse als besonders verschleißfester Bremsklotz ausgeführt sein.

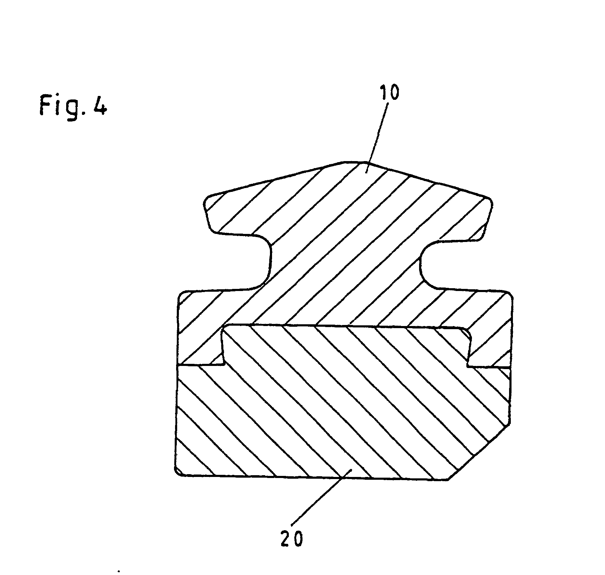

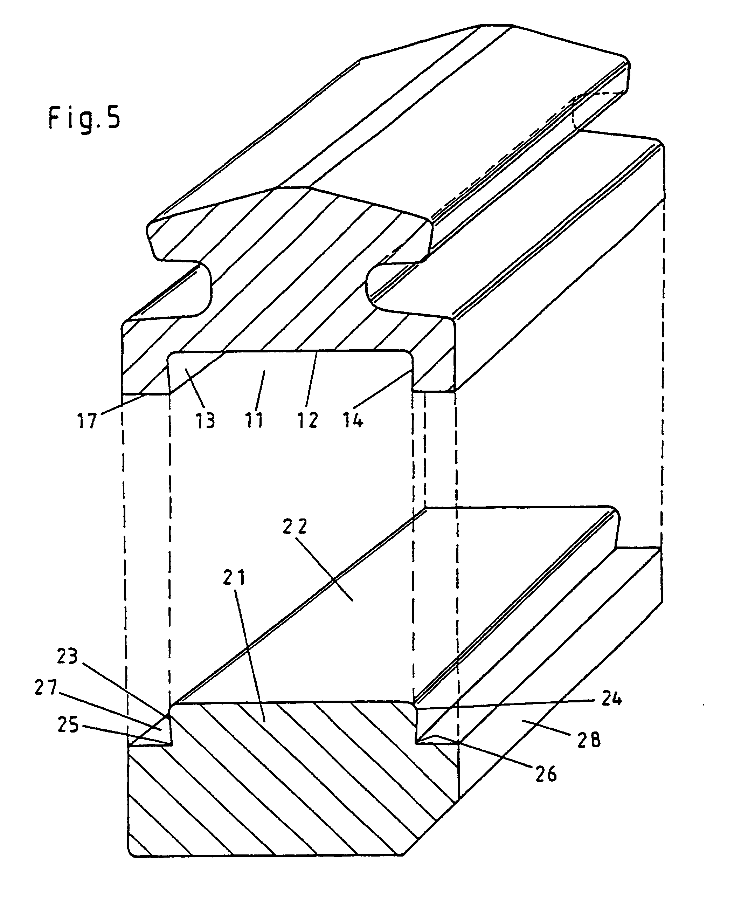

Die Rippe 21 ist im Querschnitt (Fig. 4 und 5) trapezförmig ausgebildet, wobei die obere Seite bzw. Fläche 22 die größere Seite bzw. Fläche ist. Die Seitenflächen 23, 24 können unter einem beliebigen Trapezwinkel gegenüber der Grundseite bzw. -fläche angeordnet sein, wobei der Winkel in Verbindung mit der jeweiligen Länge der Seitenflächen 23 und 24 so gebildet wird, daß ein Abziehen oder Ausbrechen des Reibwerkstoffblockes aus dem Trägerkörper wirksam verhindert wird. Von Bedeutung sind hierbei die Hinterschnitte 25 und 26, die auch ungradlinig, beispielsweise bei welligen Rippen oder andersartigen Profilgestaltungen, ausgeführt sein können. Die Gestaltung einer großflächigen Erhebung, wie in Form der Rippe 21, wird durch das Preßwerkzeug oder beim Sintern vorgegeben. Da der fertig gepreßte Reibwerkstoffblock 20 über die in Fig. 3 dargestellte Höhe h in den flüssigen Gießwerkstoff des Trägerkörpers eingetaucht und anschließend der Guß abgekühlt wird, liegt der Trägerkörper im Bereich der Eintauchtiefe h allseitig an dem Reibwerkstoffblock 20 an. Durch die gießtechnische Herstellung bedingt bilden sich somit entsprechend der Rippe 21 geformte nutenförmige Ausnehmungen 11 mit Stirnflächen 12 sowie Seitenflächen 13 und 14, die formschlüssig an den genannten Flächen 22 bis 24 des Reibwerkstoffblockes 20 bzw. der Rippe 21 anliegen. Entsprechendes gilt für die Stirnflächen 17 und 27 des Trägerkörpers 10 und des Reibwerkstoffblockes 20. Der Reibwerkstoffblock 20 kann jedoch auch mit einer Nut versehen werden, worin nach dem Guß eine entsprechende Rippe des Trägerkörpers eingreift. In dem in den Fig. 2 bis 5 dargestellten Fall besitzen der Reibwerkstoffblock und der Trägerkörper jeweils eine gleiche Länge und gleiche Breite, weshalb die Außenflächen 18 und 28 ebenso eine einheitliche bündige Fläche bilden, wie die aus Fig. 3 ersichtliche Stirnseite.

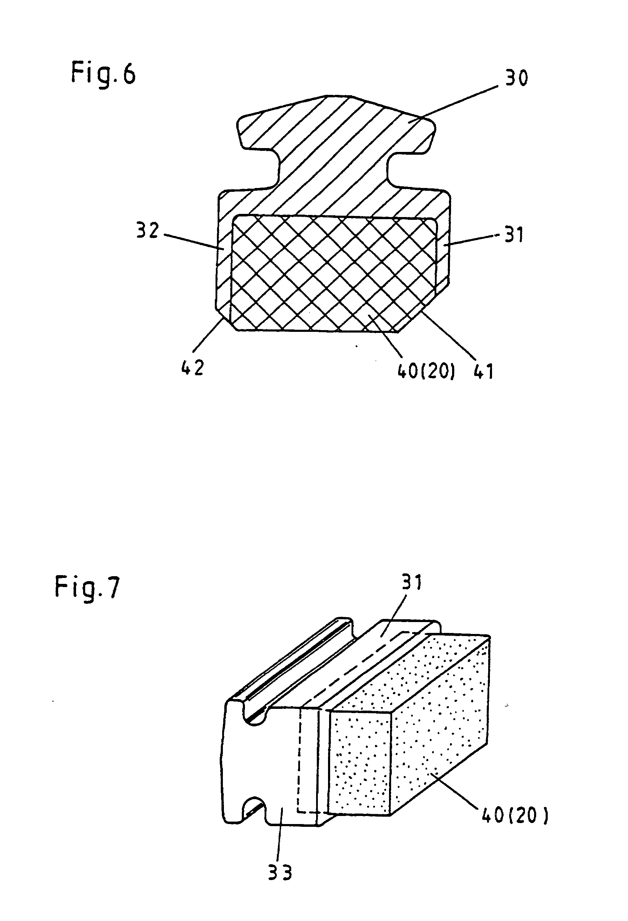

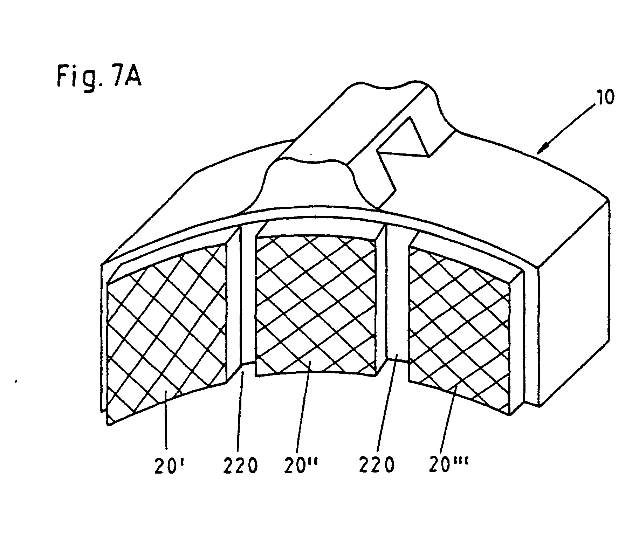

Während nach den Fig. 2 bis 5 bei der dort dargestellten Kombination von Trägerkörper 10 und Reibwerkstoffblock 20, der Reibwerkstoffblock 20 nur im Bereich der Rippe 21 umgreift, wird der Reibwerkstoffblock 40 in der Ausführungsform nach Fig. 6 und 7 an seinen Seitenflächen ganz (Fig. 6) oder teilweise (Fig. 7) von den Seiten 31 und 32 eines Guß-Trägerkörpers 30 umgriffen. Der übergreifende Abschnitt kann auf zwei gegenüberliegenden Seiten 31 und 32 oder allseitig, wie anhand der Stirnseite 33 in Fig. 7 demonstriert, vorliegen. In jedem Fall besitzt der Trägerkörper 30 einen im wesentlichen quaderförmigen Hohlraum, in den der Reibwerkstoffblock 40 ganz oder teilweise eingebettet ist. Die vorderen Kanten können je nach Bedarf, Zweck und, wie Fig. 6 zu entnehmen, Schrägungen 41, 42 aufweisen. Nach der in Fig. 7A dargestellten Ausführungsform besteht der Bremsklotz ebenfalls aus einem metallisch gegossenen Trägerkörper 10 mit mehreren als Reibbelag dienenden Reibwerkstoffflächen 20', 20 ", 20 "', die ohne Zwischenräume von dem Trägerkörper 10 gehalten und umgeben werden, wobei jedoch auch eine Anordnung der einzelnen Reibwerkstoffblöcke 20', 20", 20 "' in Abständen unter Ausbildung von Zwischenräumen 220 möglich ist. Beim Gießen des Trägerkörpers 10 können auch diese Zwischenräume 220 mit dem Material des Trägerkörpers 10 ausgefüllt sein.

Während nach der einen Ausführungsform der Trägerkörper 10 aus einem metallischen, gegossenen Formkörper besteht, besteht darüber hinaus die Möglichkeit, den Trägerkörper 10 ebenfalls aus einem gesinterten Material herzustellen, welches bevorzugt die nachstehende Zusammensetzung aufweist:

| | |
|---|---|
| 80 % bis 99 % | Eisen |
| 0,5 % bis 5 % | Molybdändisulfit |
| 0,5 % bis 5 % | Kohlenstoff |
| 0,5 % bis 2 % | Siliciumcarbid. |

Entsprechend der in Fig. 1 gezeigten Ausführungsform besteht jeder der beiden Polschuhe 310, 310' oder deren Polschuhreibflächen 310a, 310'a aus einem Reibwerkstoffblock 40 mit der vorangehend angegebenen Zusammensetzung.

Derartige Magnetschienenbremsen 300 kommen verstärkt bei Schienenfahrzeugen mit hohen und höheren Geschwindigkeiten zum Einsatz, bei denen Reibungskrafte unmittelbar auf die Schiene übertragen werden. Der an der Magnetspule 301 fließende Gleichstrom bewirkt eine magnetische Spannung, die in dem Magnetkern 305 einen magnetischen Fluß erzeugt, der sich über den Schienenkopf 321 schließt. Die Anpreßkraft bei derartigen Magnetschienenbremsen wird hierbei durch einen zum Bremsen auf die Schienen abgesenkten Elektromagneten erzeugt. Durch Anlegen eines Induktionsstromes wird ein Magnetfeld ausgebildet, aufgrund dessen der Magnetkern 305 gegen die Schiene gezogen wird. An den Schenkeln 305a, 305b bzw. den Schenkelabschnitten 305a' 305b' sind die Reibwerkstoffblöcke 40 angeordnet, und zwar direkt oder unter Zwischenschaltung von Trägerkörpem, an denen die Reibwerkstoffblöcke 40 befestigt sind. Neben einer Anordnung der Reibwerkstoffolöcke 40 an den Schenkeln 305a, 305b bzw. den Schenkelabschnitten 305a', 305b' besteht auch die Möglichkeit, die Reibwerkstoffblöcke 40 in den Schenkeln anzuordnen. Letztlich sind die Polschuhe 310, 310' bzw. die Polschuhreibflächen 310a, 310'a mit derartigen Reibwerkstoffblöcken 40 versehen oder selbst als Reibwerkstoffblöcke ausgebildet (Fig. 1, 6 und 7).

Das für den Reibwerkstoffblock 40 verwendete Sintermaterial weist in den magnetflußführenden Polschuhbereichen, wie dessen Zusammensetzung dies ausweist, metallische Anteile auf, um eine ausreichende Induktion, d.h. einen ausreichenden magnetischen Fluß zu ermöglichen. In den nicht magnetflußführenden Bereichen, die das erfindungsgemäße Sintermaterial umfassen, weist dies einen hohen Gewichtsanteil nicht magnetisch leitfähigen Materials, wei beispielsweise Zinn, Kupfer, Zink, Nickel oder Aluminium bzw. Zusammensetzungen oder Legierungen dieser Stoffe auf.

In allen dargestellten Fällen wird zunächst der Reibwerkstoffblock 20 bzw. 40 durch Sintern hergestellt und anschließend der Trägerkörper angegossen. Das Befestigen des Reibwerkstoffblockes 20 bzw. 40 an einem gegossenen und der Form des Reibwerkstoffblockes angepaßten Träger- bzw. Grundkörper kann auch über Schraubverbindungen oder über andere geeignete Verbindungen erfolgen.

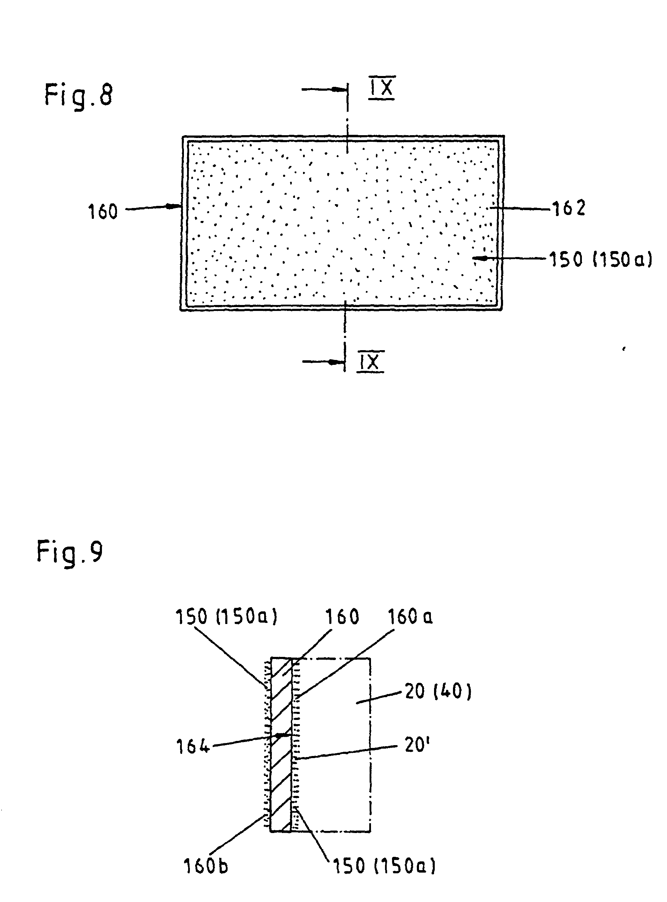

Der Reibwerkstoffblock 20 bzw. 40 kann nach einer weiteren Ausführungsform an der den Trägerkörper 10 zugekehrten Wandfläche vor dem Umgießen mit einer Oberflächenprofilierung in Form eines Halterungsbettes 150 versehen werden, um den Verbund zwischen dem Reibwerkstoffblock und dem gegossenen Trägerkörper zu verbessern. Dieses Halterungsbett 150 kann die verschiedensten geometrischen Formen, Kugelform o.dgl. aufweisen (Fig. 8 und 9).

Des weiteren kann vor dem Umgießen des Reibwerkstoffblockes 20 bzw. 40, also vor dem Gießen des Trägerkörpers 10 der Reibwerkstoffblock auf einem Trägerblech 160 angebracht sein, das auf seinen beiden Wandflächen 160a, 150b einem Halterungsbett 150 versehen ist.

In den Fig. 8 bis 12 ist mit 160 ein in an sich bekannter Weise ausgebildetes Trägerblech aus metallischen oder anderen geeigneten Werkstoffen bezeichnet, auf dem ein angedeuteter Block 20 aus einer gepreßten Reibmaterialmischung angeordnet ist. Bei der Ausführungsform gemäß Fig. 8 und 9 weist das Trägerblech 160 auf der den Reibwerkstoffblock 20 tragenden Seite 160a ein Halterungsbett 150 als strukturell ausgebildete Oberfläche auf, die aus einer Grundschicht 150a von Formelementen oder Formkörpern 162 besteht, die bevorzugterweise aus der Materialmischung aus einem höher schmelzenden Anteil und einem niedriger schmelzenden Anteil derart gemischt, komprimiert und temperaturbehandelt sind, daß jeder einzelne Formkörper 162 Hinterschneidungen, Einziehungen u. dgl. 164 aufweist, wobei die Formkörper 162 auch aus jedem beliebigen metallischen Material bestehen können. Des weiteren ist auch die dem Reibwerkstoffblock 20 abgekehrte Wandfläche 160b mit einem Halterungsbett 150 versehen.

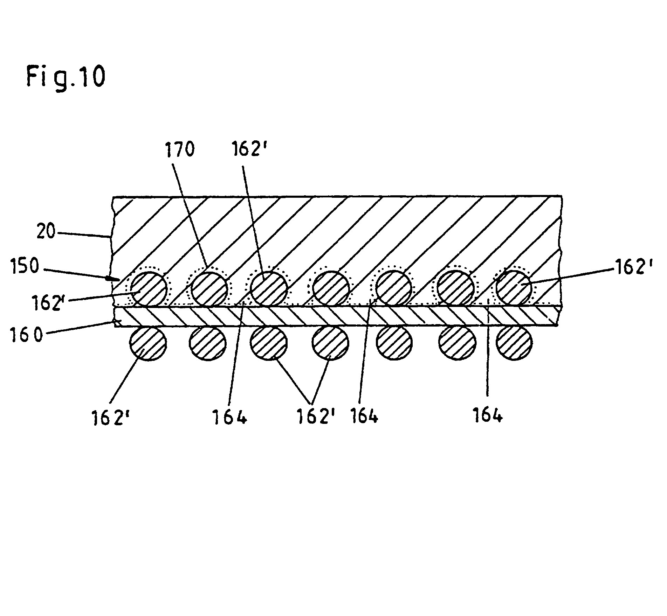

Bei dem in Fig. 10 gezeigten Ausführungsbeispiel besteht das Halterungsbett 150 aus auf das Trägerblech 160 aufgesinterten kugelförmigen Formkörpem 162', die im Befestigungsbereich Hinterschneidungen 164 bilden. Auf das Halterungsbett 150 ist z.B. ein galvanischer Überzug 170 aus Metall aufgebracht, der die einzelnen Formkörper 162 umgibt und der den von den Formkörpern 162' gebildeten Konturen angepaßt ist, wobei der Überzug 170 auch dem Verlauf der Hinterschneidungen, Einziehungen o.dgl. 164 folgt, so daß ein geschlossener metallischer Überzug erhalten wird; dadurch wird gleichzeitig ein guter Korrosionsschutz für das Trägerblech 160 geschaffen, das bevorzugterweise eine geringe Materialstärke aufweist. Der metallische Überzug 170 kann aus Kupfer, Silber, Zinn, Cadmium, Zink oder einem anderen geeigneten Material bestehen. Der weitere Vorteil, den der galvanische Metallüberzug erbringt, liegt in einer genauen Maßhaltigkeit in Bezug auf die Dicke des Überzuges. Diese Maßhaltigkeit ist weder bei Überzügen aus einem Lack noch bei einer Pulverbeschichtung möglich. Hinzu kommt, daß der metallische Überzug in einer Gleichmäßigkeit auftragbar ist, die mit anderen Beschichtungsverfahren nicht erreichbar ist. Außerdem bleiben die Konturen des Halterungsbettes 150 voll erhalten, so daß trotz des metallischen Überzuges 170 zwischen dem aufgepreßten Reibwerkstoff und dem Rauhgrund ein hoher Kraft- und Formschluß besteht.

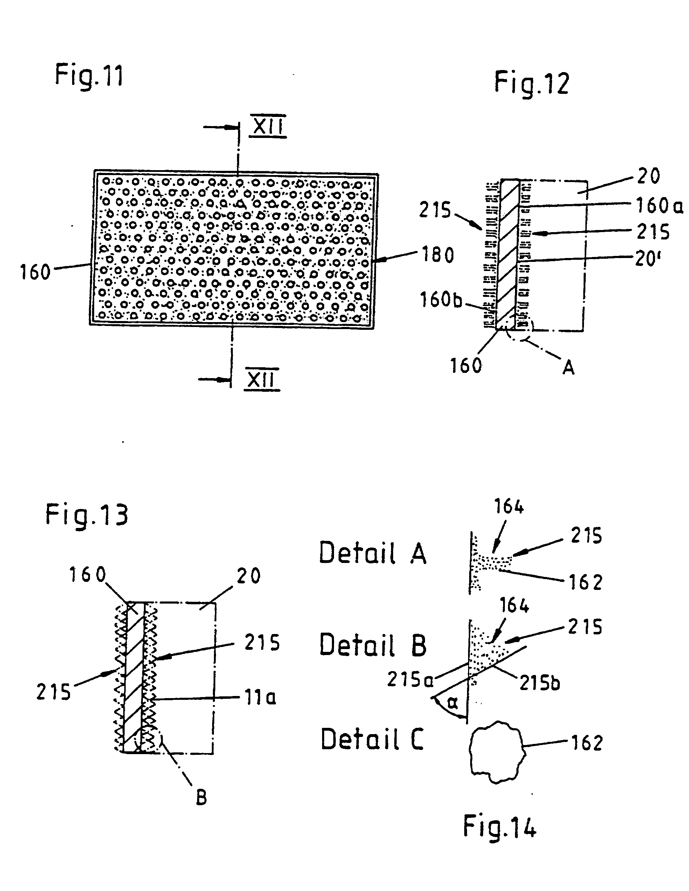

Die Reibmaterialmischung wird unter Zuhilfenahme eines entsprechenden Formkörpers auf das mit dem Halterungsbett 150 versehene Trägerblech 160 derart aufgepreßt, daß während des Preßvorganges die Reibmaterialmischung in die Zwischenräume zwischen die einzelnen Formelemente 162 (deren bizarre Oberfläche im Detail C in Fig. 14 angedeutet ist) in diejenigen Räume einfließt, die von Hinterschneidungen, Einziehungen u.dgl. 164 gebildet sind. Auf diese Weise erfolgt vermittels der Formelemente 162 eine innige Verbindung zwischen dem sich verformenden Reibwerkstoffblock 20 und dem Halterungsbett 150, die sich ineinander verkrallen. Durch die Materialeigenschaften erfolgt jedoch auch eine derartige Verformung des Halterungsbettes 150 und von dessen Grundschicht 150a so, daß der Reibwerkstoff die nicht vom Halterungsbett ausgefüllten Oberflächenteile der Reibmaterialienaufnahmefläche 20' beaufschlagt, so daß eine vollflächige Ausfüllung der Reibmaterialaufnahmefläche 20' erfolgt, so daß sich hier keine oder nur eine sehr geringe Anzahl von Freiflächen und Freiräumen ergibt, wodurch ein Eindringen von Feuchtigkeit und die damit verbundenen Korrosionsmoglichkeiten vermieden werden (Fig. 9).

Eine weitere Ausführungsform ist in den Fig. 11 und 12 dargestellt, bei der der Grundaufbau dem der Fig. 8 und 9 entspricht, und auf der Grundschicht 150a Greifelemente 180 in Form zylindrischer oder kegelstumpfförmiger Säulen oder als Kegelstumpf ausgebildet sind, wie im Detail A angedeutet ist (Fig. 14). Hierbei ergeben sich die Greifelemente 180 in einer Makrobetrachtung als Säulen; sie sind in sich als bizarre Strukturen mit Hinterschneidungen, Einziehungen u.dgl. 164 ausgebildet.

In Fig. 13 ist eine weitere Ausführungsform dargestellt, bei der in Abweichung zu Fig. 12 die Greifelemente 215 als Pyramiden mit einer dreieckigen, viereckigen oder mehreckigen Grundfläche ausgebildet sind. Um hier optimale Halterungs- und Verschleißeigenschaften zu erhalten, ist dabei vorgesehen, daß der Pyramidenwinkel zwischen der Pyramidengrundfläche 215a und der Pyramidenseite 215b etwa 60° beträgt, wie im Detail B (Fig. 14) angedeutet ist.

Das Aufbringen des metallischen Überzuges kann auf galvanischem oder thermischem Wege oder durch Aufdampfen erfolgen. Es besteht auch die Möglichkeit, vor dem Aufrauhungsprozeß bzw. vor dem Aufbringen des Halterungsbettes die Trägerplatte mit einem metallischen Überzug, z.B. aus Kupfer, zu versehen. Aus dem metallischen Überzug wird dann der Rauhgrund herausgearbeitet.

Besteht das Trägerblech 160 aus einem dünnen Blech, dann ist dieses mit einem Profil, z.B. verrippt, versehen, so daß die Eigensteifigkeit des Trägerbleches 160 erhöht wird.

Weist der Reibwerkstoffblock 20 Profilierung, wie eine Rippe 21 auf (Fig. 2 und 3), dann ist das Trägerblech 160 mit einer entsprechenden Profilgestaltung versehen.

Der Reibwerkstoffblock 20 und der Reibwerkstoffblock 40 bestehen aus den gleichen Reibmaterialmischungen, wie diese in den Ansprüchen 1-7 angegeben sind.

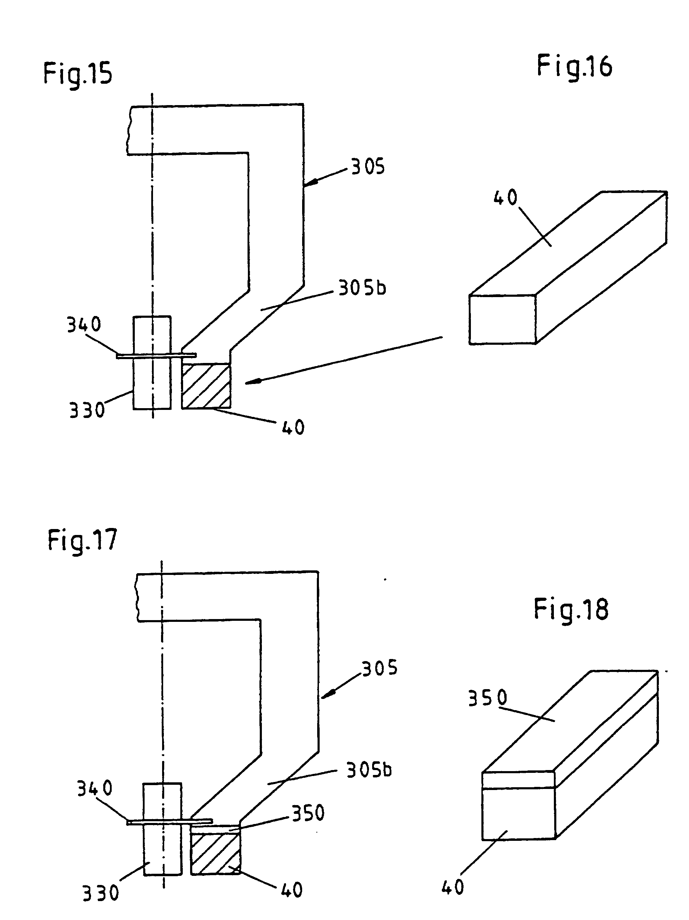

Gemäß Fig. 15 und 16 sind an den freien Enden der Schenkel 305a, 305b - in den Fig. 15, 17, 19, 21 ist nur der Schenkel 305b dargestellt - des Magnetkernes 305 der Magnetschienenbremse 300 Reibwerkstoffblöcke 40 aus gesintertem Reibwerkstoff angeordnet. Die Befestigung des Reibwerkstoffblockes 40 an den Schenkelenden erfolgt durch Sintern, Schweißen oder Löten. Die amagnetische Zwischenleiste 330 ist über Stift- oder Schraubverbindungen 340 mit den Schenkeln des Magnetkernes 305 verbunden. Die amagnetische Zwischenleiste kann ebenfalls aus einem Sintermaterial gemäß einem der Ansprüche 1-7 hergestellt sein oder aus verschleißfestem Sphäroguß, beispielsweise GGG50, GGG60, GGG70, GGG80 oder einem partikelverstärkten Sphäroguß.

Bei der in Fig. 17 oder 18 gezeigten Ausführungsformen erfolgt die Befestigung der Reibwerkstoffblöcke 40 an den Schenkeln des Magnetkernes 305 unter Zwischenschaltung eines Stahlbleches 350. Das Stahlblech 350 ist vermittels einer Schweißverbindung mit dem jeweiligen Schenkel des Magnetkernes 305 verbunden, wohingegen die Befestigung des Reibwerkstoffblockes 40 an dem Stahlblech 350 durch Sintern, Schweißen oder Löten erfolgt. Das Stahlblech 350 kann auch mit einem Rauhgrund versehen sein, um eine feste Verbindung zwischen dem Stahlblech und dem Reibwerkstoffblock zu schaffen.

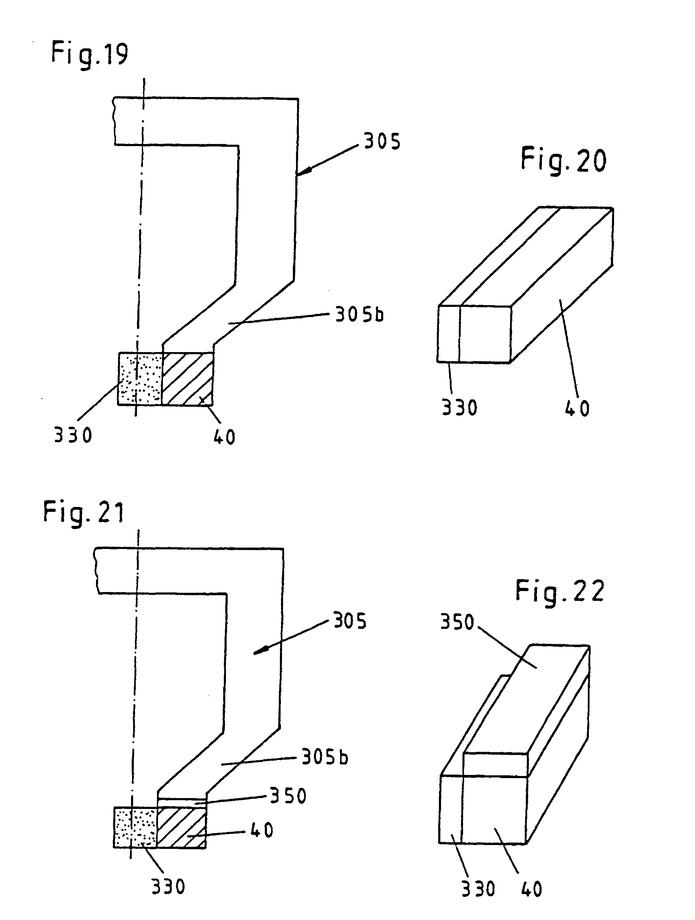

Anstelle einer Befestigung der Zwischenleiste 330 an den Schenkeln des Magnetkernes 305 vermittels einer Verstiftung oder Verschraubung, kann die Zwischenleiste 330 gemäß Fig. 19 und 20 auch integrierter Bestandteil des Reibwerkstoffblockes 40 sein, der an den Schenkelenden wie zuvor zu Fig. 15 und 16 ausgeführt, befestigt sein kann. Es erfolgt eine kraftschlüssige Verbindung zwischen dem Reibwerkstoffblock 40 und der Zwischenleiste 330. Die Verbindung kann auch durch Sintern, Löten und Verklebung hergestellt werden. Auch eine Verbindung nach Art des Sandwichs kann vorgenommen werden, nämlich durch Pressen und Sintern.

Die Zwischenleiste 330 kann an einem der beiden Reibwerkstoffblöcke 40 oder an beiden Reibwerkstoffblöcken befestigt sein.

Wie zu Fig. 17 und 18 beschrieben, kann der Reibwerkstoffblock 40 mit der integrierten Zwischenleiste 330 gemäß Fig. 19 und 20 auch unter Zwischenschaltung eines Stahlbleches 350 mit den Schenkeln des Magnetkernes 305 verbunden sein (Fig. 21 und 22).

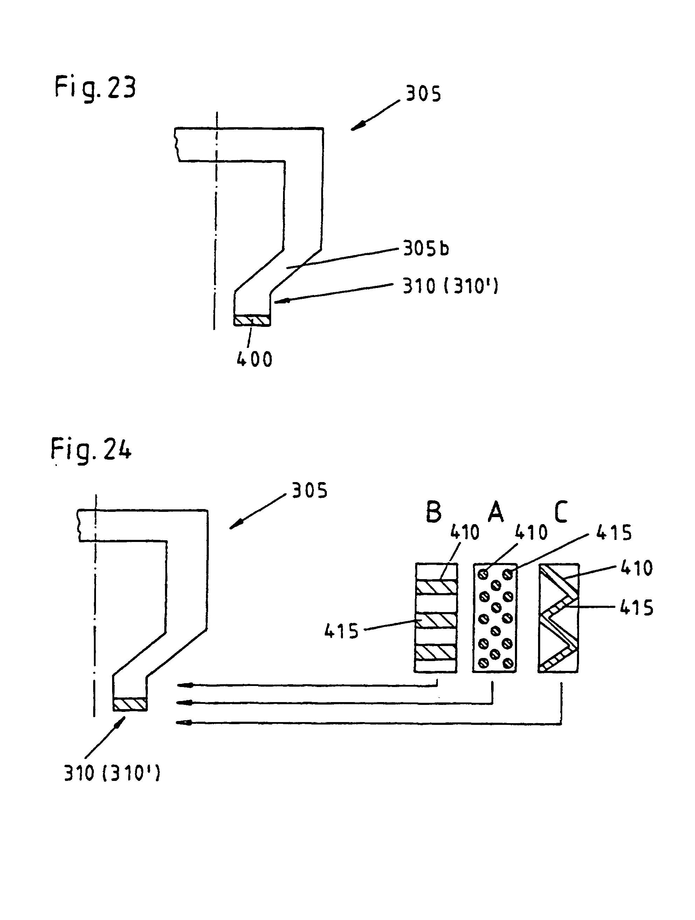

GemaB Fig 23 ist der erfindungsgemäße Sinterwerkstoff an der die Reibfläche bildenden Unterseite der Polschuhe 310, 310' als dünne, extrem verschleißfeste Beschichtung 400 aufgebracht, die stoß- und temperaturfest ist und das Anbacken von Aufschweißungen vermeidet. Ist die Beschichtung 400 amagnetisch ausgebildet, so weist sie einen hohen Reibwert auf, damit die verminderte magnetische Anzugskraft wieder ausgeglichen wird. Die maximal mögliche Schichtdicke solcher Anordnungen resultiert aus der Bedingung, daß die Bremskräfte etwa denen von herkömmlichen St 37 - Gliedern entsprechen soll, d.h. aus der Verminderung der magnetischen Anzugskraft und der möglichen Kompensation über den hoheren Reibwert.

Fig. 24 zeigt eine Ausführungsform, bei der die Reibflache eines jeden Polschuhs 310, 310' konstruktiv in Bereiche unterteilt ist, die die magnetische Haftkraft erzeugen, sog. magnetflußführende Bereiche, und solche, die die Reibarbeit übemehmen und vorzugsweise nicht magnetflußführend sind. Dazu werden in die Polschuhreibfläche Nuten, Bohrungen oder Aussparungen 410 eingebracht, in die extrem verschleißfestes, stoßfestes, temperaturbeständiges (amagnetisches oder magnetisches) Material 415 eingebracht wird.

In Fig. 24 sind mit A, B, C verschiedene Ausführungsformen von Polschuhreibflächen dargestellt, nämlich mit Bohrungen (A) mit Nuten (B) und Ausnehmungen im Zick-Zack-Verlauf (C). Das eingebrachte Material 415 muß dabei einen deutlich höheren Reibwert als St 37 haben, um den Haftkraftverlust infolge der kleineren durchfluteten Querschnittsfläche auszugleichen.

Das Aufbringen der Beschichtungen auf den Polschuhen bzw. deren Reibflächen kann durch eine der folgenden Möglichkeiten bzw. eine Kombinationen davon erfolgen:
- direktes Flamm-, Hochgeschwindigkeitsflamm-, Plasma- oder Detonationsspritzen auf die Polschuhe,
- indirektes Flamm-, Hochgeschwindigkeits-, Plasma- oder Detonationsspritzen auf Bleche, die an die Polschuhe angeschweißt werden,
- direktes Aufsintern bzw. Aufschmelzen des Belagmaterials auf die Polschuhe,
- Aufsintern bzw. Aufschmelzen des Belagmaterials auf Bleche und Anschweißen bzw. Hartlöten dieser Bleche an die Polschuhe,
- Aufsintern bzw. Aufschmelzen des Belagmaterials auf Bleche und Festschrauben dieser Bleche an den Polschuhen.

Beim Beschichten der Polschuhe 310, 310' mit extrem verschleilßfesten Schichten sollte die Polschuhhöhe bevorzugterweise von 20 mm auf etwa 5 mm reduziert werden, wodurch ein Gewichtsersparnis und höhere Anzugskräfte erreicht werden. Eine gewisse Resthöhe ist jedoch zur Bündelung des Magnetflusses notwendig.

Beim Einsatz von Sinterpolschuhen, bei denen es sich um massive Polschuhe aus Sintermaterial handelt, werden diese wie folgt angebracht:
- Aufsintern auf Bleche und Anschrauben dieser Bleche,
- Direktes Anschrauben von Sinterpolschuhen,
- Einpressen / Einschieben des Reibmaterials in formschlüssige Aufnahmen.

Bei der Verwendung von Polschuhen 310, 310' aus Werkstoffkombinationen erfolgt ein Umgießen von gepreßten bzw. gegossenen Teilbereichen. Auch ein Verschrauben bzw. Verstiften von Platten aus extrem verschleißbeständigem Material mit magnetisch gutem Polschuhmaterial ist möglich.

Zum Einsatz kommen dabei folgende Werkstoffe:

Bei der Ausführungsform nach Fig. 23 werden Keramik- oder Karbidbeschichtungen mit amagnetischer Matrix, z.B. WC, Cr₃C₂ eingesetzt.

Bei Polschuhen 310, 310' mit verschleißfester, magnetischer günstiger Beschichtung kommen Keramik- oder Karbidbeschichtungen mit magnetischer Matrix oder Sinterpolschuhe mit entsprechenden Fe-Anteil zum Einsatz.

In denjenigen Fällen, bei denen zwischen den Polschuhen 310, 310' eine Zwischenleiste 330 (Fig. 1) angeordnet ist, dann kann diese aus Keramik, Sintermetall (amagnetisch) bestehen. Auch Karbidbeschichtungen (amagnetischer), faser- bzw. partikelverstärkte amagnetische Werkstoffe, z.B. partikelverstärktes Aluminium, CFC oder CFK können zum Einsatz gelangen - die gleichen Werkstoffe können auch bei Polschuhen eingesetzt werden, deren Bereiche konstruktiv unterteilt sind (Fig. 24).

Jeder Polschuh 310, 310' besteht nach einer ersten Ausführungsform konstruktiv aus verschiedenen Materialien und Bereichen, wovon einer die Erzeugung der magnetischen Haftkraft, der andere die Verrichtung der Reibarbeit übernimmt, wohingegen nach einer zweiten Ausführungsform jeder Polschuh 310, 310' aus einem Werkstoff besteht, der die beiden Aufgaben magnetische Haftkraft erzeugen und Reibarbeit verrichten übernimmt.

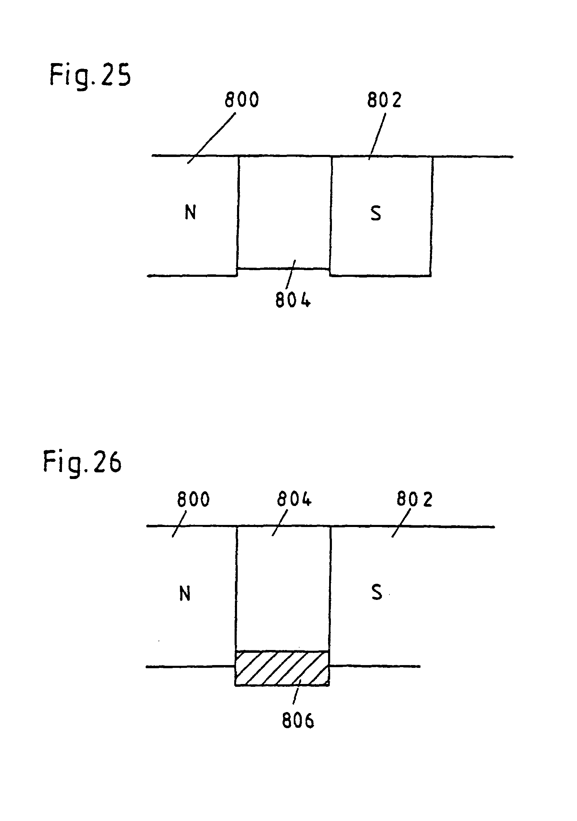

In Figur 25 und 26 sind alternative Ausführungsformen einer magnetischen Schienenbremse umfassend einen Sinterwerkstoff gemäß der Erfindung dargestellt.

Bei den in Figur 25 und 26 gezeigten Schienenbremsen handelt es sich um Permanentmagnetschienenbremsen, bei denen magnetflußführende Bereiche und nicht magnetflußführende Bereiche in Längsrichtung der Bremse sich einander abwechseln.

Zwischen den magnetflußführenden Bereichen 800, 802 ist ein nicht magnetflußführender Bereich 804 angeordnet. Der magnetflußführende Bereich 800, 802 kann entweder in Gänze aus einem erfindungsgemäßen Sinterwerkstoff bestehen oder aber aus einem permanentmagnetischen Material, an dessen Unterseite eine Beschichtung aus dem erfindungsgemäßen Verschleiß und extrem stoßfesten Sinterwerkstoff aufgebracht ist. Als Werkstoff für den nicht magnetflußführenden Bereich kommt insbesondere Stahl, bevorzugt GGG50, GGG60, GGG70 oder ein partikelverstärkter Sphäroguß in Frage.

Bei der in Fig. 25 dargestellten Ausführungsform befinden sich lediglich die permanentmagnetischen Bereiche 800, 802 in ständigem Kontakt mit der Schiene.

In Fig. 26 ist eine alternative Ausführungsform einer Permanentmagnetschienenbremse dargestellt. Wiederum werden magnetflußführende Bereiche 800, 802 von nicht magnetflußführenden Bereichen 804 getrennt. In vorliegendem Ausführungsbeispiel ist der nicht magnetflußführende Bereich beispielsweise ein Gußmaterial, dessen Reibfläche, die in Kontakt mit dem Schienenkopf kommt, als Beschichtung mit dem erfindungsgemäßen Sinterwerkstoff ausgebildet ist. Die Beschichtung 806 wird auf den Träger- bzw. Grundkörper aus Guß beispielsweise mittels Flammspritzen etc. aufgebracht.

Bei sämtlichen Prozentangaben fur die Reibmaterialmischung in vorgenanntem Text handelt es sich um Gewichtsprozente.

## Patentansprüche

1. Sinterwerkstoff als Reibwerkstoff für einen Polschuh, einen Polschuhbereich oder wenigstens einen Bereich der Polschuhreibfläche einer magnetischen Schienenbremse mit einem magnetischen Grund- und/oder Trägerkörper,
**dadurch gekennzeichnet,**
**dass** der Sinterwerkstoff
- einen Anteil an pulverisiertem Verschleißhemmer, der aus einem oder mehreren der nachfolgenden Stoffe ausgewählt wird:
Al₂O₃, ZrO₂, Al₂TiO₅, Y₂O₃, SiC, Si₃N₄, WC, Cr₃C₂, TiC und
- einen Anteil eines schutzschichtbildenden Pulvers, das aus einem oder mehreren der nachfolgenden Stoffe ausgewählt wird:
Sphäroguss, Graphit, Eisensulfid, Mangansulfid, Blei, Molybdändisulfid,
umfasst.

2. Sinterwerkstoff nach Anspruch 1,
**dadurch gekennzeichnet,**
**dass** der Sinterwerkstoff mindestens einen Anteil aus magnetisch leitfähigem Pulver, wie beispielsweise Eisenpulver, aufweist.

3. Sinterwerkstoff nach einem der Ansprüche 1 und 2,
**dadurch gekennzeichnet,**
**dass** der Sinterwerkstoff die nachfolgende Zusammensetzung aufweist:
| | |
|---|---|
| 80 - 99 % | magnetisch leitfähigen und/oder magnetisch nicht leitfähigen Materials |
| 0,5 - 5 % | Molybdändisulfid |
| 0,5 - 5 % | Kohlenstoff |
| 0,5 - 2 % | Siliciumcarbid. |

4. Sinterwerkstoff nach Anspruch 3,
**dadurch gekennzeichnet,**
**dass** das magnetisch leitfähige Material wenigstens einen Anteil Eisen umfasst.

5. Sinterwerkstoff nach Anspruch 3 oder 4,
**dadurch gekennzeichnet,**
**dass** das magnetisch nicht leitfähige Material einen oder Kombinationen mehrerer der nachfolgenden Stoffe:
Zinn, Kupfer, Zink, Nickel, Aluminium
oder Legierungen hiervon umfasst.

6. Polschuh für eine magnetische Schienenbremse,
**dadurch gekennzeichnet,**
**dass** der Polschuh aus einem Sinterwerkstoff gemäß Anspruch 1 besteht.

7. Polschuh nach Anspruch 6,
**dadurch gekennzeichnet,**
**dass** der Sinterwerkstoff mindestens einen Anteil aus magnetisch leitfähigem Pulver, wie beispielsweise Eisenpulver, aufweist.

8. Polschuh nach einem der Ansprüche 6 und 7,
**dadurch gekennzeichnet,**
**dass** der Sinterwerkstoff die nachfolgende Zusammensetzung aufweist:
| | |
|---|---|
| 80 - 99 % | magnetisch leitfähigen und/oder magnetisch nicht leitfähigen Materials |
| 0,5 - 5 % | Molybdändisulfid |
| 0,5 - 5 % | Kohlenstoff |
| 0,5 - 2 % | Siliciumcarbid. |

9. Polschuh nach Anspruch 8,
**dadurch gekennzeichnet,**
**dass** das magnetisch leitfähige Material wenigstens einen Anteil Eisen umfasst.

10. Polschuh nach Anspruch 8 oder 9,
**dadurch gekennzeichnet,**
**dass** das magnetisch nicht leitfähige Material einen oder Kombinationen mehrerer der nachfolgenden Stoffe:
Zinn, Kupfer, Zink, Nickel, Aluminium
oder Legierungen hiervon umfasst.

11. Magnetische Schienenbremse,
- mit einem magnetischen Grund- und/oder Trägerkörper und
- einem Polschuhbereich, wobei der Polschuhbereich einen magnetflussführenden Bereich und einen magnetflusstrennenden Bereich aufweist,
**dadurch gekennzeichnet,**
**dass**
a.) der magnetflussführende Bereich oder
b.) der magnetflusstrennende Bereich oder
c.) der magnetflussführende und der magnetflusstrennende Bereich
als der Schiene zugewandte Reibwerkstoff einen Sinterwerkstoff gemäß Anspruch 1 umfasst.

12. Magnetische Schienenbremse nach Anspruch 11,
**dadurch gekennzeichnet,**
**dass** der Sinterwerkstoff mindestens einen Anteil aus magnetisch leitfähigem Pulver, wie beispielsweise Eisenpulver, aufweist.

13. Magnetische Schienenbremse nach einem der Ansprüche 11 und 12,
**dadurch gekennzeichnet,**
**dass** der Sinterwerkstoff die nachfolgende Zusammensetzung aufweist:
| | |
|---|---|
| 80 - 99 % | magnetisch leitfähigen und/oder magnetisch nicht leitfähigen Materials |
| 0,5 - 5 % | Molybdändisulfid |
| 0,5 - 5 % | Kohlenstoff |
| 0,5 - 2 % | Siliciumcarbid. |

14. Magnetische Schienenbremse nach Anspruch 13,
**dadurch gekennzeichnet,**
**dass** das magnetisch leitfähige Material wenigstens einen Anteil Eisen umfasst.

15. Magnetische Schienenbremse nach Anspruch 13 oder 14,
**dadurch gekennzeichnet,**
**dass** das magnetisch nicht leitfähige Material einen oder mehrere der nachfolgenden Stoffe:
Zinn, Kupfer, Zink, Nickel, Aluminium
oder Legierungen hiervon umfasst.

16. Magnetische Schienenbremse nach einem der Ansprüche 11 bis 15,
**dadurch gekennzeichnet,**
**dass** der magnetflusstrennende Bereich als in Längsrichtung der magnetischen Schienenbremse verlaufende Zwischenleiste ausgebildet ist.

17. Magnetische Schienenbremse nach Anspruch 11,
**dadurch gekennzeichnet,**
**dass** in Längsrichtung der magnetischen Schienenbremse alternierend magnetflusstrennende und magnetflussführende Polschuhbereiche vorgesehen sind.

18. Magnetische Schienenbremse nach einem der Ansprüche 11 bis 17,
**dadurch gekennzeichnet,**
**dass** der Sinterwerkstoff als Beschichtung ausgestaltet ist, die dem magnetflussführenden Bereich und/oder den magnetflusstrennenden Bereich des Polschuhbereiches zugeordnet ist.

19. Magnetische Schienenbremse nach Anspruch 18,
**dadurch gekennzeichnet,**
**dass** die Beschichtung eine aufgespritzte, aufgesinterte oder aufgeschmolzene Beschichtung ist.

20. Magnetische Schienenbremse nach Anspruch 19,
**dadurch gekennzeichnet,**
**dass** die dem Polschuhbereich zugeordnete Beschichtung direkt auf den jeweiligen Polschuhbereich aufgebracht ist.

21. Magnetische Schienenbremse nach Anspruch 18,
**dadurch gekennzeichnet,**
**dass** die dem Polschuhbereich zugewandte Beschichtung auf ein Träger- bzw. Zwischenblech aufgebracht ist, das mit dem jeweiligen Polschuhbereich verbunden ist.

22. Magnetische Schienenbremse nach einem der Ansprüche 19 bis 21,
**dadurch gekennzeichnet,**
**dass** die Beschichtung eine Höhe von 20 - 0,5 mm, vorzugsweise 5 mm aufweist.

23. Magnetische Schienenbremse nach einem der Ansprüche 11 bis 22,
**dadurch gekennzeichnet,**
**dass** der Reibwerkstoff als Reibwerkstoffblock ausgestaltet ist, der dem magnetflussführenden Bereich und/oder dem magnetflusstrennenden Bereich zugeordnet ist.

24. Magnetische Schienenbremse nach einem der Ansprüche 11 bis 23,
**dadurch gekennzeichnet,**
**dass** der Reibwerkstoffblock (20, 40) und/oder die Beschichtung auf der dem Grundkörper und/oder Trägerkörper (10, 30) zugekehrten Wandfläche eine derartige Oberflächenprofilierung, wie Halterungsbett (150), aufweist, dass zur Festigkeitserhöhung der Verbindung zwischen dem Reibwerkstoffblock (20, 40) und der Beschichtung und dem Grund- oder Trägerkörper (10, 30) eine Makroverzahnung ausgebildet ist.

25. Magnetische Schienenbremse nach einem der Ansprüche 23 und 24,
**dadurch gekennzeichnet,**
**dass** der Reibwerkstoffblock (20, 40) und/oder die Beschichtung auf einem Träger- bzw. Zwischenblech (160) angeordnet ist, das auf der den Reibwerkstoffblock (20, 40) tragenden Seite oder auf beiden Seiten je ein eine Makroverzahnung ausbildendes aufgesintertes Halterungsbett (150) aus einzelnen mit dem Reibwerkstoffblock kraft- und formschlussbildenden Formkörpern (162, 162') mit Hinterschneidungen, Einziehungen (164), als Rauhgrund aufweist, wobei auf dem Halterungsbett (150) der aufgepresste Reibwerkstoffblock (20) unter Ausfüllung der Hinterschneidungen, Einziehung (164) der einzelnen Formkörper (162, 162') befestigt ist.

26. Magnetische Schienenbremse nach einem der Ansprüche 23 bis 25,
**dadurch gekennzeichnet,**
**dass** vor dem Aufpressen des Reibwerkstoffes auf das Träger- bzw. Zwischenblech (160) mit oder ohne dem aufgesinterten oder anderweitig ausgebildeten Halterungsbett (150) ein auf galvanischem, thermischen oder auf einem anderen geeigneten Wege erzeugter metallischer Überzug (170) als Korrosionsschutz für das Trägerblech (160) aufgebracht ist, wobei der metallische Überzug (170) aus Kupfer, Silber, Zinn, Cadmium, Zink, Chrom oder einem anderen geeigneten Metall besteht.

27. Magnetische Schienenbremse nach einem der Ansprüche 23 bis 25,
**dadurch gekennzeichnet,**
**dass** vor dem Aufpressen des Reibwerkstoffes auf das Trägerblech (160) mit dem aufgesinterten Halterungsbett (150) ein Überzug aus einem magnetisierbaren Material als Korrosionsschutz für das Trägerblech (160) aufgebracht wird.

28. Magnetische Schienenbremse nach einem der Ansprüche 23 bis 27,
**dadurch gekennzeichnet,**
**dass** das Halterungsbett (150) aus einem Materialgemisch aus einem Anteil (A) mit niedrigerem Schmelzpunkt und einem Anteil (B) mit einem höheren Schmelzpunkt besteht.

29. Magnetische Schienenbremse nach einem der Ansprüche 23 bis 28,
**dadurch gekennzeichnet,**
**dass** der niedrig schmelzende Anteil (A) ein niedrig schmelzendes Metall, wie Zinn, oder eine niedrig schmelzende Legierung, wie Bronze, Messing, ist.

30. Magnetische Schienenbremse nach einem der Ansprüche 23 bis 28,
**dadurch gekennzeichnet,**
**dass** der höher schmelzende Anteil (B) aus Sand oder Keramikpulver besteht.

31. Magnetische Schienenbremse nach einem der Ansprüche 23 bis 29,
**dadurch gekennzeichnet,**
**dass** der Schmelzpunkt des höher schmelzenden Anteils (B) unter dem Schmelzpunkt des Trägerbleches (160) liegt.

32. Magnetische Schienenbremse nach einem der Ansprüche 23 bis 30,
**dadurch gekennzeichnet,**
**dass** der niedrig schmelzende Anteil (A) aus etwa 30 % Bronze und der höher schmelzende Anteil (B) aus etwa 70 % Fe-Pulver besteht.

33. Magnetische Schienenbremse nach Anspruch 32,
**dadurch gekennzeichnet,**
**dass** die verwendete Bronze einen Anteil von 10 % Zinn aufweist.

34. Magnetische Schienenbremse nach einem der Ansprüche 23 bis 32,
**dadurch gekennzeichnet,**
**dass** das aufgesinterte Halterungsbett (150) aus einer das Trägerblech (160) im Bereich der Reibmaterialaufnahmefläche (20') vollflächig oder teilflächig überdeckenden Grundschicht (150a) aus einzelnen, kraft- und formschlussbildenden Formelementen (11), die Hinterschneidungen oder Einziehungen (164) aufweisen, besteht.

35. Magnetische Schienenbremse nach Anspruch 34,
**dadurch gekennzeichnet,**
**dass** auf der Grundschicht (150a) jeweils einen Abstand zueinander aufweisende Greifelemente (180; 215) ausgebildet sind.

36. Magnetische Schienenbremse nach Anspruch 34,
**dadurch gekennzeichnet,**
**dass** jedes Greifelement (180; 215) in Form einer zylindrischen Säule, kegelstumpfförmigen Säule oder als Kegelstumpf ausgebildet ist.

37. Magnetische Schienenbremse nach Anspruch 34,
**dadurch gekennzeichnet,**
**dass** jedes Greifelement (215) in Form einer Pyramide mit einer dreieckigen, viereckigen oder mehreckigen Grundfläche ausgebildet ist.

38. Magnetische Schienenbremse nach Anspruch 35 oder 36,
**dadurch gekennzeichnet,**
**dass** der Kegel- oder Pyramidenwinkel zwischen der Grundfläche und einer Seite etwa 60 Grad beträgt.

39. Magnetische Schienenbremse nach einem der Ansprüche 23 bis 38,
**dadurch gekennzeichnet,**
**dass** das Halterungsbett (150) neben dem Anteil (A) und dem Anteil (B) einen Anteil (C) aus Kohlenstoff aufweist.

40. Magnetische Schienenbremse nach einem der Ansprüche 16, 18 bis 39,
**dadurch gekennzeichnet,**
**dass** die in Längsrichtung verlaufende Zwischenleiste (330) in dem Zwischenraum (315) zwischen den Polschuhen (310, 310') der magnetischen Schienenbremse angeordnet ist, die lösbar vermittels Verstiftung oder Verschraubung oder unlösbar durch Anschweißung, Anspritzung oder Aufsinterung mit den Polschuhen (310; 310') verbunden ist.

41. Magnetische Schienenbremse nach Anspruch 40,
**dadurch gekennzeichnet,**
**dass** die magnetische Schienenbremse einen Magnetkern (305) umfasst, der freie Schenkel (305a, 305b) aufweist, an dessen Enden Reibwerkstoffblöcke (40) angeordnet sind, die an den Schenkeln durch Sintern, Schweißen, Kleben oder Löten befestigt sind.

42. Magnetische Schienenbremse nach Anspruch 40,
**dadurch gekennzeichnet,**
**dass** die magnetische Schienenbremse einen Magnetkern (305) umfasst, der freie Schenkel (305a, 305b) aufweist, an deren Enden Reibwerkstoffblöcke (40) unter Zwischenschaltung eines Stahlbleches (350) befestigt sind, wobei das Stahlblech (350) des Reibwerkstoffblockes (40) mittels einer Schweißverbindung an dem Schenkel (305a; 305b) des Magnetkerns (305) und der Reibwerkstoffblock (40) an dem Stahlblech (350) durch Sintern, Schweißen, Kleben oder Löten oder vermittels eines auf der Oberfläche des Stahlbleches (350) ausgebildeten Rauhgrundes an diesem befestigt ist.

43. Magnetische Schienenbremse nach einem der Ansprüche 41 oder 42,
**dadurch gekennzeichnet,**
**dass** die amagnetische Zwischenleiste (330) zwischen den beiden Schenkeln (305a, 305b) des Magnetkerns (305) über Stift- oder Schraubverbindungen (340) mit den Schenkeln verbunden sind.

44. Magnetische Schienenbremse nach einem der Ansprüche 41 oder 42,
**dadurch gekennzeichnet,**
**dass** die magnetflusstrennende Zwischenleiste (330) einen amagnetischen Werkstoff umfasst und an einem der beiden Reibwerkstoffblöcke (40) oder an beiden Reibwerkstoffblöcken (40), die an den freien Enden der Schenkel (305a, 305b) des Magnetkernes (305) befestigt sind, befestigt und integrierter Bestandteil der Reibwerkstoffblöcke (40) ist.

45. Magnetische Schienenbremse nach Anspruch 43,
**dadurch gekennzeichnet,**
**dass** die Zwischenleiste (330) kraftschlüssig mit den Reibwerkstoffblöcken (40) verbunden und an diesen durch Schweißen, Sintern, Löten oder Verklebung befestigt ist.

46. Magnetische Schienenbremse nach einem der Ansprüche 11 bis 45,
**dadurch gekennzeichnet,**
**dass** der Grund- und/oder Trägerkörper ein Sintermaterial gemäß einem der Ansprüche 1 bis 7 umfasst.

47. Magnetische Schienenbremse nach einem der Ansprüche 11 bis 45,
**dadurch gekennzeichnet,**
**dass** der Grund- und/oder Trägerkörper einen Grauguss, Sphäroguss oder Stahlguss aufweist.

48. Magnetische Schienenbremse nach einem der Ansprüche 11 bis 47,
**dadurch gekennzeichnet,**
**dass** der Reibwerkstoff zumindest teilweise einen verschleißfesten Sphäroguss umfasst.

49. Magnetische Schienenbremse nach Anspruch 48,
**dadurch gekennzeichnet,**
**dass** der verschleißfeste Sphäroguss aus einem der nachfolgenden Materialien ausgewählt wird:
GG 50, GG 60, GG 70, GG 80 oder einem partikelverstärkten Sphäroguss.

## Claims

1. Sintered material as friction material for a pole shoe, a pole shoe area or at least one area of the pole shoe friction surface of a magnetic rail brake with a magnetic base and/or carrier body,
**characterized in**
**that** the sintered material comprises
- a powdered wear inhibitor part which is selected among one or several of the following materials:
Al₂O₃, ZrO₂, Al₂TiO₅, Y₂O₃,SiC, Si₃N₄, WC, Cr₃C₂, TiC and
- a part of a protection layer forming powder which is selected among one or several of the following materials:
nodular iron, graphite, iron sulphide, manganese sulphide, lead, molybdenum sulphide.

2. Sintered material according to claim 1,
**characterized in**
**that** the sintered material has at least one part of magnetically conductive powder such as, for example, iron powder.

3. Sintered material according to any of the claims 1 and 2,
**characterized in**
**that** the sintered material has the following composition:
80 - 99 % magnetically conductive and/or magnetically non conductive material
0,5 - 5 % molybdenum sulphide
0,5 - 5 % carbon
0,5 - 2 % silicon carbide.

4. Sintered material according to claim 3,
**characterized in**
**that** the magnetically conductive material comprises at least one part iron.

5. Sintered material according to claim 3 or 4,
**characterized in**
**that** the magnetically non conductive material comprises one or combinations of several of the following materials:
tin, copper, zinc, nickel, aluminium
or alloys thereof.

6. Pole shoe for a magnetic rail brake,
**characterized in**
**that** the pole shoe is made of a sintered material according to claim 1.

7. Pole shoe according to claim 6,
**characterized in**
**that** the sintered material has at least one part of magnetically conductive powder such as, for example, iron powder.

8. Pole shoe according to any of the claims 6 and 7,
**characterized in**
**that** the sintered material has the following composition:
80 - 99 % magnetically conductive and/or magnetically non conductive material
0,5 - 5 % molybdenum sulphide
0,5 - 5 % carbon
0,5 - 2 % silicon carbide.

9. Pole shoe according to claim 8,
**characterized in**
**that** the magnetically conductive material comprises at least one part iron.

10. Pole shoe according to claim 8 or 9,
that the magnetically non conductive material comprises one or combinations of several of the following materials:
tin, copper, zinc, nickel, aluminium
or alloys thereof.

11. Magnetic rail brake,
- with a magnetic base and/or carrier body and
- a pole shoe area, whereby the pole shoe has a magnetic flux conducting area and a magnetic flux separating area,
**characterized in that**
a.) the magnetic flux conducting area or
b.) the magnetic flux separating area or
c.) the magnetic flux conducting and the magnetic flux separating area
as friction material turned to the rail comprises a sintered material according to claim 1.

12. Magnetic rail brake according to claim 11,
**characterized in**
**that** the sintered material has at least one part of magnetically conductive powder such as, for example, iron powder.

13. Magnetic rail brake according to any of the claims 11 and 12,
**characterized in**
**that** the sintered material has the following composition:
80 - 99 % magnetically conductive and/or magnetically non conductive material
0,5 - 5 % molybdenum sulphide
0,5 - 5 % carbon
0,5 - 2 % silicon carbide.

14. Magnetic rail brake according to claim 13,
**characterized in**
**that** the magnetically conductive material comprises at least one part iron.

15. Magnetic rail brake according to a claim 13 or 14,
**characterized in**
**that** the magnetically non conductive material comprises one or combinations of several of the following materials:
tin, copper, zinc, nickel, aluminium
or alloys thereof.

16. Magnetic rail brake according to any of the claims 11 to 15,
**characterized in**
**that** the magnetic flux separating area is configured as an intermediate ridge running in longitudinal direction of the magnetic rail brake.

17. Magnetic rail brake according to claim 11,
**characterized in**
**that** magnetic flux separating and magnetic flux conducting pole shoe areas are provided alternately in longitudinal direction of the magnetic rail brake.

18. Magnetic rail brake according to any of the claims 11 to 17,
**characterized in**
**that** the sintered material is configured as a coating which is associated to the magnetic flux conducting and/or the magnetic flux separating area of the pole shoe area.

19. Magnetic rail brake according to claim 18,
**characterized in**
**that** the coating is a sprayed-on, sintered-fused or melted-on coating.

20. Magnetic rail brake according to claim 19,
**characterized in**
**that** the coating associated to the pole shoe area is applied directly on the respective pole shoe area.

21. Magnetic rail brake according to claim 18,
**characterized in**
**that** the coating turned to the pole shoe area is applied onto a carrier or intermediate sheet steel which is connected with the respective pole shoe area.

22. Magnetic rail brake according of any of the claims 19 to 21,
**characterized in**
**that** the coating has a height of 20 - 0,5 mm, preferably of 5 mm.

23. Magnetic rail brake according to any of the claims 11 to 22,
**characterized in**
**that** the friction material is configured as a friction material block which is associated to the magnetic flux conducting area and/or to the magnetic flux separating area.

24. Magnetic rail brake according to any of the claims 11 to 23,
**characterized in**
**that** the friction material block (20, 40) and/or the coating has a surface profile such as a fixing bed (150) on the wall face turned to the base body and/or carrier body (10, 30), that a macro-indenting for increasing the strength of the junction between the friction material block (20, 40) and the coating and the base or carrier body (10, 30).

25. Magnetic rail brake according to any of the claims 23 and 24,
**characterized in**
**that** the friction material block (20, 40) and/or the coating is placed on a carrier or intermediate sheet steel (160) which has, on the side carrying the friction material block (20, 40) or on both sides, respectively one sinter-fused fixing bed (150) constituting a macro-indenting made of individual moulded elements (162, 162') forming a frictional connection and a positive locking with undercuts, recesses (164) as rough ground, whereby the pressed-on friction material block (20) is fixed on the fixing bed (150) by filling the undercuts, recesses (164) of the individual moulded bodies (162, 162').

26. Magnetic rail brake according to any of the claims 23 to 25,
**characterized in**
**that**, before pressing the friction material onto the carrier or the intermediate sheet steel (160) with or without the sinter-fused or in another manner configured fixing bed (150), a metallic coating (170) produced galvanically, thermally or in another manner is applied as a protection against corrosion for the carrier sheet steel (160), whereby the metallic coating (170) is made of copper, silver, tin, cadmium, zinc, chrome or another appropriate material.

27. Magnetic rail brake according to any of the claims 23 to 25,
**characterized in**
**that**, before pressing the friction material onto the carrier sheet steel (160) with the sinter-fused fixing bed (150), a coating made of a magnetizable material is applied as a protection against corrosion for the carrier sheet steel (160).

28. Magnetic rail brake according to any of the claims 23 to 27,
**characterized in**
**that** the fixing bed (150) is made of a material mixture of a part (A) with a lower melting point and a part (B) with a higher melting point.

29. Magnetic rail brake according to any of the claims 23 to 28,
**characterized in**
**that** the lower melting part (A) is a lower melting metal such as tin, or a lower melting alloy such as bronze, brass.

30. Magnetic rail brake according to any of the claims 23 to 28,
**characterized in**
**that** the higher melting part (B) is made of sand or ceramic powder.

31. Magnetic rail brake according to any of the claims 23 to 29,
**characterized in**
**that** the melting point of the higher melting part (B) is situated under the melting point of the carrier sheet steel (160).

32. Magnetic rail brake according to any of the claims 23 to 30,
**characterized in**
**that** the lower melting part (A) is made of approximately 30 % bronze and the higher melting part (B) of approximately 70 % iron powder.

33. Magnetic rail brake according to claim 32,
**characterized in**
**that** the used bronze has a percentage of 10 % tin.

34. Magnetic rail brake according to any of the claims 23 to 32,
**characterized in**
**that** the sinter-fused fixing bed (150) is made of a ground layer (150a) covering the carrier sheet steel (160) in the area of the friction material receiving surface (20') on the whole surface or on part of the surface, this layer being made of individual moulded elements (162, 162') forming a frictional connection and a positive locking which have undercuts or recesses (164).

35. Magnetic rail brake according to claim 34,
**characterized in**
**that** gripping elements (180, 215) are configured on the ground layer (150a) respectively spaced from each other.

36. Magnetic rail brake according to claim 34,
**characterized in**
**that** each gripping element (180, 215) is configured in form of a cylindrical column, truncated column or as a tuncated cone.

37. Magnetic rail brake according to claim 34,
**characterized in**
**that** each gripping element (215) is configured in form of a pyramid with a triangular, square or polygonal base surface.

38. Magnetic rail brake according to claim 35 or 36,
**characterized in**
**that** the cone or pyramid angle between the base surface and one side amounts to approximately 60 degrees.

39. Magnetic rail brake according to any of the claims 23 to 38,
**characterized in**
**that** the fixing bed (150) has besides the part (A) and the part (B) a part (C) of carbon.

40. Magnetic rail brake according to any of the claims 16, 18 to 39,
**characterized in**
**that** the intermediate ridge (330) running in longitudinal direction is placed in the intermediate space (315) between the pole shoes (320, 310') of the magnetic rail brake which is connected with the pole shoes (310 ; 310') in a removable manner by means of a pin or a screwed connection or in a nondetachable manner by welding, spraying or sinter-fusing.

41. Magnetic rail brake according to claim 40,
**characterized in**
**that** the magnetic rail brake comprises a magnetic core (305) which has free legs (305a, 305b), core at the ends of which friction material blocks (40) are placed which are fixed. to the legs by sintering, welding, bonding or soldering.

42. Magnetic rail brake according to claim 40,
**characterized in**
**that** the magnetic rail brake comprises a magnetic core (305) which has free legs (305a, 305b), at the ends of which friction material blocks (40) are fixed by intercalating a steel sheet (350), whereby the steel sheet (350) of the friction material block (40) is fixed by a welded connection on the leg (305a ; 305b) of the magnetic core (305) and the friction material block (40) is fixed on the sheet steel (350) by sintering, welding, bonding or soldering or by means of a rough ground formed on the surface of the sheet steel (350) on this rough ground.

43. Magnetic rail brake according to any of the claims 41 or 42,
**characterized in**
**that** the amagnetic intermediate ridge (330) is connected between the two legs (305a, 305b) of the magnetic core (305) by pin or screwed connections (340) with the legs.

44. Magnetic rail brake according to any of the claims 41 or 42,
**characterized in**
**that** the magnetic flux separating intermediate ridge (330) comprises an amagnetic material and is fixed to one of the two friction material blocks (40) or on both friction material blocks (40), which are fixed to the free ends of the legs (305a, 305b) of the magnetic core (305), and is an integrated part of the friction material blocks (40).

45. Magnetic rail brake according to claim 43,
**characterized in**
**that** the intermediate ridge (330) is connected by adherence with the friction material blocks (40) and is fixed to these blocks by welding, sintering, soldering or bonding.

46. Magnetic rail brake according to any of the claims 11 to 45,
**characterized in**
**that** the base and/or carrier body comprises a sintered material according to any of the claims 1 to 7.

47. Magnetic rail brake according to any of the claims 11 to 45,
**characterized in**
**that**
the base and/or carrier body has a gray cast iron, a nodular iron or a cast steel.

48. Magnetic rail brake according to any of the claims 11 to 47,
**characterized in**
**that** the friction material comprises at least partially a wear resisting nodular iron.

49. Magnetic rail brake according to claim 48,
**characterized in**
**that** the wear resisting nodular iron is selected from one of the following materials:
GG 50, GG 60, GG 70, GG 80 or one particle reinforced nodular iron.

## Revendications

1. Matériau fritté comme matériau de friction pour une pièce polaire, une zone de pièce polaire ou au moins une zone de la surface de friction de la pièce polaire d'un frein magnétique sur rail avec un corps magnétique de base et/ou de support.
**caractérisé en ce**
**que** le matériau fritté comprend
- une fraction d'inhibiteur d'usure pulvérisé qui est sélectionné parmi une ou plusieurs des substances suivantes :
Al₂O₃, ZrO₂, Al₂TiO₅, Y₂O₃,SiC, Si₃N₄, WC, Cr₃C₂, TiC et
- une fraction d'une poudre formant une couche de protection qui est sélectionnée parmi une ou plusieurs des substances suivantes :
fonte nodulaire, graphite, sulfure de fer, sulfure manganeux, plomb, sulfure de molybdène.

2. Matériau fritté selon la revendication 1,
**caractérisé en ce**
**que** le matériau fritté présente au moins une fraction de poudre conductrice magnétiquement comme, par exemple, de la poudre de fer.

3. Matériau fritté selon l'une des revendications 1 et 2,
**caractérisé en ce**
**que** le matériau fritté présente la composition suivante :
80 à 99 % de matériau conducteur magnétiquement et/ou non conducteur magnétiquement,
0,5 à 5 % de sulfure de molybdène,
0,5 à 5 % de carbone,
0,5 à 2 % de carbure de silicium.

4. Matériau fritté selon la revendication 3,
**caractérisé en ce**
**que** le matériau conducteur magnétiquement comprend au moins une fraction de fer.

5. Matériau fritté selon la revendication 3 ou 4,
**caractérisé en ce**
**que** le matériau non conducteur magnétiquement comprend l'une ou des combinaisons de plusieurs des substances suivantes :
étain, cuivre, zinc, nickel, aluminium
ou des alliages de ceux-ci.

6. Pièce polaire pour un frein magnétique sur rail,
**caractérisée en ce**
**que** la pièce polaire est constituée par un matériau fritté selon la revendication 1.

7. Pièce polaire selon la revendication 6,
**caractérisée en ce**
**que** le matériau fritté présente au moins une fraction de poudre conductrice magnétiquement comme, par exemple, de la poudre de fer.

8. Pièce polaire selon l'une des revendications 6 et 7,
**caractérisée en ce**
**que** le matériau fritté présente la composition suivante :
80 à 99 % de matériau conducteur magnétiquement et/ou non conducteur magnétiquement,
0,5 à 5 % de sulfure de molybdène,
0,5 à 5 % de carbone,
0,5 à 2 % de carbure de silicium.

9. Pièce polaire selon la revendication 8,
**caractérisée en ce**
**que** le matériau conducteur magnétiquement comprend au moins une fraction de fer.

10. Pièce polaire selon la revendication 8 ou 9,
**caractérisée en ce**
**que** le matériau non conducteur magnétiquement comprend l'une ou des combinaisons de plusieurs des substances suivantes :
étain, cuivre, zinc, nickel, aluminium
ou des alliages de ceux-ci.

11. Frein magnétique sur rail
- avec un corps magnétique de base et/ou de support et
- une zone de pièce polaire, la zone de pièce polaire présentant une zone conductrice de flux magnétique et une zone séparatrice de flux magnétique,
**caractérisé en ce que**
a.) la zone conductrice de flux magnétique ou
b.) la zone séparatrice de flux magnétique ou
c.) la zone conductrice de flux magnétique ou la zone séparatrice de flux magnétique
en tant que matériau de friction tourné vers le rail comprend un matériau fritté selon la revendication 1.

12. Frein magnétique sur rail selon la revendication 11,
**caractérisé en ce**
**que** le matériau fritté présente au moins une fraction de poudre conductrice magnétiquement comme, par exemple, de la poudre de fer.

13. Frein magnétique sur rail selon l'une des revendications 11 et 12,
**caractérisé en ce**
**que** le matériau fritté présente la composition suivante :
80 à 99 % de matériau conducteur magnétiquement et/ou non conducteur magnétiquement,
0,5 à 5 % de sulfure de molybdène,
0,5 à 5 % de carbone,
0,5 à 2 % de carbure de silicium.

14. Frein magnétique sur rail selon la revendication 13,
**caractérisé en ce**
**que** le matériau conducteur magnétiquement comprend au moins une fraction de fer.

15. Frein magnétique sur rail selon la revendication 13 ou 14,
caractérisé en ce
le matériau non conducteur magnétiquement comprend l'une ou des combinaisons de plusieurs des substances suivantes :
étain, cuivre, zinc, nickel, aluminium
ou des alliages de ceux-ci.

16. Frein magnétique sur rail selon l'une des revendications 11 à 15,
**caractérisé en ce**
**que** la zone séparatrice de flux magnétique est configurée comme une baguette intermédiaire dans le sens longitudinal du frein magnétique sur rail.

17. Frein magnétique sur rail selon la revendication 11,
**caractérisé en ce**
**que** des zones de pièce polaire séparatrices de flux magnétique et conductrices de flux magnétique en alternance sur rail sont prévues dans le sens longitudinal du frein magnétique.

18. Frein magnétique sur rail selon l'une des revendications 11 à 17,
**caractérisé en ce**
**que** le matériau fritté est configuré comme enduction qui est associée à la zone conductrice du flux magnétique et/ou à la zone séparatrice du flux magnétique de la zone de la pièce polaire.

19. Frein magnétique sur rail selon la revendication 18,
**caractérisé en ce**
**que** l'enduction est une enduction appliquée au pistolet, frittée ou fondue.

20. Frein magnétique sur rail selon la revendication 19,
**caractérisé en ce**
**que** l'enduction associée à la zone de pièce polaire est appliquée directement sur la zone de pièce polaire respective.

21. Frein magnétique sur rail selon la revendication 18,
**caractérisé en ce**
**que** l'enduction tournée vers la zone de pièce polaire est appliquée sur une tôle de support ou une tôle intermédiaire qui est reliée à la zone de pièce polaire respective.

22. Frein magnétique sur rail selon l'une des revendications 19 à 21,
**caractérisé en ce**
**que** l'enduction présente une hauteur de 20 à 0,5 mm, de préférence de 5 mm.

23. Frein magnétique sur rail selon l'une des revendications 11 à 22,
**caractérisé en ce**
**que** le matériau de friction est configuré comme un bloc de matériau de friction qui est associé à la zone conductrice de flux magnétique et/ou à la zone séparatrice de flux magnétique.

24. Frein magnétique sur rail selon l'une des revendications 11 à 23,
**caractérisé en ce**
**que** le bloc de matériau de friction (20, 40) et/ou l'enduction présente, sur la surface de paroi tournée vers le corps de base et/ou de support (10, 30), un profilé de surface comme un lit de fixation (150) tel qu'une macrodenture est configurée pour augmenter la résistance de la jonction entre le bloc de matériau de friction (20, 40) et l'enduction et le corps de base ou de support (10, 30).

25. Frein magnétique sur rail selon l'une des revendications 23 et 24,
**caractérisé en ce**
**que** le bloc de matériau de friction (20, 40) et/ou l'enduction est placée sur une tôle de support ou une tôle intermédiaire (160) qui présente, sur le côté qui porte le bloc de matériau de friction (20, 40) ou des deux côtés, respectivement un lit de fixation (150) fritté, qui configure respectivement une macrodenture, constitué par différents corps moulés (162, 162'), formant une adhérence ou une fermeture positive avec le bloc de matériau de friction, avec des contre-dépouilles, des retrécissements (164) comme fond rugueux, le bloc de matériau de friction pressé étant fixé sur le lit de fixation (150) en remplissant les contre-dépouilles, rétrécissements (164) des différents corps moulés (162, 162').

26. Frein magnétique sur rail selon l'une des revendications 23 à 25,
**caractérisé en ce**
**qu'**avant de presser le matériau de friction sur la tôle de support ou intermédiaire (160) avec ou sans le lit de fixation (150) fritté ou configuré d'une autre manière, un revêtement métallique (170) produit galvaniquement, thermiquement ou d'une autre manière est appliqué comme protection contre la corrosion pour la tôle de support (160), le revêtement métallique (170) étant constitué par du cuivre, de l'argent, de l'étain, du cadmium, du zinc, du chrome ou un autre matériau approprié.

27. Frein magnétique sur rail selon l'une des revendications 23 à 25,
**caractérisé en ce**
**qu'**avant de presser le matériau de friction sur la tôle de support (160) avec le lit de fixation fritté (150), un revêtement en un matériau magnétisable est appliqué comme protection contre la corrosion pour la tôle de support (160).

28. Frein magnétique sur rail selon l'une des revendications 23 à 27,
**caractérisé en ce**
**que** le lit de fixation (150) est constitué en un mélange de matériau constitué par une fraction (A) avec un point de fusion plus bas et une fraction (B) avec un point de fusion plus élevé.

29. Frein magnétique sur rail selon l'une des revendications 23 à 28,
**caractérisé en ce**
**que** la fraction à point de fusion bas (A) est un métal à bas point de fusion comme l'étain ou un allliage à bas point de fusion comme le bronze, le laiton.

30. Frein magnétique sur rail selon l'une des revendications 23 à 28,
**caractérisé en ce**
**que** la fraction à point de fusion élevé (B) est constituée par du sable ou de la poudre de céramique.

31. Frein magnétique sur rail selon l'une des revendications 23 à 29,
**caractérisé en ce**
**que** le point de fusion de la fraction à point de fusion élevé (B) se situe au-dessous du point de fusion de la tôle de support (160).

32. Frein magnétique sur rail selon l'une des revendications 23 à 30,
**caractérisé en ce**
**que** la fraction à bas point de fusion (A) est constituée par environ 30 % de bronze et la fraction à point de fusion plus élevé (B) par environ 70 % de poudre de fer.

33. Frein magnétique sur rail selon la revendication 32,
**caractérisé en ce**
**que** le bronze utilisé présente un taux d'étain de 10 %.

34. Frein magnétique sur rail selon l'une des revendications 23 à 32,
**caractérisé en ce**
**que** le lit de fixation fritté (150) est constitué par une couche de base (150a) recouvrant la tôle de support (160) sur toute la surface ou sur une partie de la surface dans la zone de la surface de logement du matériau de friction (20'), cette couche étant constituée par des différents éléments moulés (11) formant une adhérence ou une fermeture positive qui présentent des contre-dépouilles ou des rétrécissements (164).

35. Frein magnétique sur rail selon la revendication 34,
**caractérisé en ce**
**que** des éléments de préhension (180, 215) sont configurés sur la couche de base (150a) en étant respectivement espacés l'un de l'autre.

36. Frein magnétique sur rail selon la revendication 34,
**caractérisé en ce**
**que** chaque élément de préhension (180, 215) est configuré en forme de colonne cylindrique, de colonne en forme de cône tronqué ou comme un cône tronqué.

37. Frein magnétique sur rail selon la revendication 34,
**caractérisé en ce**
**que** chaque élément de préhension (215) est configuré en forme de pyramide avec une surface de base triangulaire, carrée ou polygonale.

38. Frein magnétique sur rail selon la revendication 35 ou 36,
**caractérisé en ce**
**que** l'angle de cône ou de pyramide entre la surface de base et un côté est d'environ 60 degrés.

39. Frein magnétique sur rail selon l'une des revendications 23 à 38,
**caractérisé en ce**
**que** le lit de fixation (150) présente, en plus de la fraction (A) et de la fraction (B), une fraction (C) de carbone.

40. Frein magnétique sur rail selon l'une des revendications 16, 18 à 39,
**caractérisé en ce**
**que** la baguette intermédiaire (330) qui va dans le sens longitudinal est placée dans l'espace intermédiaire (315) entre les pièces polaires (310, 310') du frein magnétique sur rail qui est relié aux pièces polaires (310 ; 310') de manière amovible par goujonnage ou vissage ou de manière inamovible par soudage, injection ou frittage.

41. Frein magnétique sur rail selon la revendication 40,
**caractérisé en ce**
**que** le frein magnétique sur rail comprend un noyau magnétique (305) qui présente des montants libres (305a, 305b) aux extrémités duquel des blocs de matériau de friction (40) sont placés qui sont fixés aux montants par frittage, soudage, collage ou brasage.

42. Frein magnétique sur rail selon la revendication 40,
**caractérisé en ce**
**que** le frein magnétique sur rail comprend un noyau magnétique (305) qui présente des montants libres (305a, 305b) aux extrémités desquels des blocs de matériau de friction (40) sont fixés en intercalant une tôle d'acier (350), la tôle d'acier (350) du bloc de matériau de friction (40) étant fixée au moyen d'un assemblage soudé au montant (305a ; 305b) du noyau magnétique (305) et le bloc de matériau de friction (40) étant fixé à la tôle d'acier (350) par frittage, soudage, collage ou brasage ou au moyen d'un fond rugueux configuré sur la surface de la tôle d'acier (350) sur celui-ci.

43. Frein magnétique sur rail selon l'une des revendications 41 ou 42,
**caractérisé en ce**
**que** la baguette intermédiaire amagnétique (330) est reliée aux montants entre les deux montants (305a, 305b) du noyau magnétique (305) par des assemblages goujonnés ou vissés (340).

44. Frein magnétique sur rail selon l'une des revendications 41 ou 42,
**caractérisé en ce**
**que** la baguette intermédiaire séparatrice du flux magnétique (330) comprend un matériau amagnétique et est fixée à l'un des deux blocs de matériau de friction (40) ou aux deux blocs de matériau de friction (40), qui sont fixés aux extrémités libres des montants (305a, 305b) du noyau magnétique (305), et est partie intégrale des blocs de matériau de friction (40).

45. Frein magnétique sur rail selon la revendication 43,
**caractérisé en ce**
**que** la baguette intermédiaire (330) est reliée par adhérence aux blocs de matériau de friction (40) et est fixée à ceux-ci par soudage, frittage, brasage ou collage.

46. Frein magnétique sur rail selon l'une des revendications 11 à 45,
**caractérisé en ce**
**que** le corps de base et/ou de support comprend un matériau de frittage selon l'une des revendications 1 à 7.

47. Frein magnétique sur rail selon l'une des revendications 11 à 45,
**caractérisé en ce**
**que** le corps de base et/ou de support présente une fonte grise, une fonte nodulaire ou de l'acier moulé.

48. Frein magnétique sur rail selon l'une des revendications 11 à 47,
**caractérisé en ce**
**que** le matériau de friction comprend au moins partiellement une fonte nodulaire résistante à l'usure.

49. Frein magnétique sur rail selon la revendication 48,
**caractérisé en ce**
**que** la fonte nodulaire résistante à l'usure est sélectionnée parmi l'un des matériaux suivants :
GG 50, GG 60, GG 70, GG 80 ou une fonte nodulaire renforcée en particules.
